# EUROPEAN PATENT APPLICATION

(11) **EP 4 255 011 A1**
(43) Date of publication of application: **04.10.2023**
(21) Application number: 21909284.8
(22) Date of filing: 17.12.2021
(51) Int. Cl.: H04W 24/02

(54) **INFORMATION PROCESSING METHOD AND APPARATUS**

(30) Priority: 24.12.2020 CN 202011556785
(71) Applicant: Huawei Technologies Co., Ltd., Shenzhen, Guangdong 518129 (CN)
(72) Inventor: LIU, Yong, Shenzhen, Guangdong 518129 (CN); BI, Xiaoyan, Shenzhen, Guangdong 518129 (CN); CHEN, Dageng, Shenzhen, Guangdong 518129 (CN); MA, Jianglei, Shenzhen, Guangdong 518129 (CN)
(74) Representative: MERH-IP Matias Erny Reichl Hoffmann Patentanwälte PartG mbB
(86) International application number: PCT/CN2021/139077
(87) International publication number: WO 2022/135288

(57) **Abstract**

This application provides an information processing method and apparatus. The method may include: obtaining information in a communication network; and processing the information by using an intelligent network. The intelligent network includes a first sub-network and a second sub-network, the first sub-network is configured to process a common feature in the information, and the second sub-network is configured to process a non-common feature in the information. The first sub-network may be used for a plurality of communication devices, and may be configured to process a common feature of the plurality of communication devices, for example, a feature corresponding to a common environment. In this manner, different communication devices may reuse the first sub-network, and a change frequency thereof does not need to be excessively high, so that complexity and costs can be reduced. Each communication device may train a corresponding second sub-network, so that performance can be ensured as much as possible. Therefore, according to this application, a tradeoff between performance and complexity can be effectively achieved, and there is more room for performance improvement and complexity reduction.

## Description

This application claims priority to Chinese Patent Application No. 202011556785.2, filed with the China National Intellectual Property Administration on December 24, 2020 and entitled "INFORMATION PROCESSING METHOD AND APPARATUS", which is incorporated herein by reference in its entirety.

### TECHNICAL FIELD

This application relates to the field of wireless communication, specifically, to a wireless communication technology in which an intelligent network is used, and in particular, to an information processing method and apparatus.

### BACKGROUND

In recent years, artificial intelligence (artificial intelligence, AI) technologies develop rapidly. The AI technologies include implementation technologies such as machine learning and deep learning. Implementation of the AI technologies is mainly to enable computers to find information from data and learn some rules, and to enable models to understand data more deeply through model training and optimization.

Intelligent networks in the AI technologies, for example, a deep neural network (deep neural network, DNN), nowadays have been widely used in fields such as image, voice, and video processing. Based on advantages of the DNN in feature extraction and mining, many academic researches turn attention to application of intelligent networks such as a deep learning network in a wireless communication scenario (such as a multi-input multi-output (multi-input multi-output, MIMO) system).

In consideration of particularity of the wireless communication scenario, for example, a low delay requirement, stricter power consumption and costs requirements, and a limited computing capability of a user terminal, how to provide an efficient neural network learning architecture to the wireless communication scenario is a research hotspot.

### SUMMARY

This application provides an information processing method and apparatus, to achieve a good tradeoff between performance and complexity, better meet a special requirement of wireless communication, and improve implementability of using an intelligent network in a communication network.

According to a first aspect, an information processing method is provided. The method may include: obtaining information in a communication network; and processing the information by using a target intelligent network, where the target intelligent network includes a plurality of sub-networks, and at least two sub-networks correspond to different types of features.

The target intelligent network may be referred to as an intelligent module, a model, or a "black box", and may represent a network with a machine learning function, for example, an artificial intelligence network.

It may be understood that the method may be performed by a communication device, or may be performed by a chip, a chip system, or a circuit used in the communication device.

Based on the foregoing technical solution, a network architecture with a hierarchical mechanism is designed by using feature grouping of a wireless communication network and a classification processing characteristic of an intelligent network. According to this solution, flexible training and use can be performed based on a feature corresponding to each sub-network. For example, for a plurality of objects, similar features of the plurality of objects may be processed by using a same sub-network, so that complexity can be reduced, and training overheads can be reduced. A particular feature of each object may be processed by using a different sub-network. For example, each object separately trains and updates or designs a sub-network corresponding to this type of feature, so that performance can be ensured as much as possible. Therefore, based on this solution, through feature layering, not only a feature of each level can be effectively grasped and extracted, to ensure training performance, but also training overheads can be minimized, thereby improving training efficiency.

According to a second aspect, an information processing method is provided. The method may include: obtaining information in a communication network; and processing the information by using a target intelligent network, where the target intelligent network includes a plurality of sub-networks, a part of sub-networks each correspond to a plurality of objects, and a part of sub-networks each correspond to one object.

It may be understood that the method may be performed by a communication device, or may be performed by a chip, a chip system, or a circuit used in the communication device.

For example, the "object" may represent a communication device (such as a terminal device or a network device), or may represent a communication scenario, or may represent another obj ect.

That a sub-network corresponds to an object represents that the sub-network may be used for the object, in other words, the sub-network may participate in processing information about the object, in other words, the sub-network is configured to process some features of the obj ect.

It may be understood that a meaning of the "part of sub-networks" includes one or more sub-networks. Based on the foregoing technical solution, in consideration of similar or approximate features of objects between object groups, and an inherent classification processing feature of an intelligent network (such as a neural network), a network architecture with a hierarchical mechanism is designed, so that network overheads can be greatly reduced while performance is ensured. For example, for a target intelligent network of an object, the target intelligent network of the object includes a plurality of sub-networks. Apart of the plurality of sub-networks may be used not only for the object, but also for one or more other objects, and another part of the plurality of sub-networks are used only for the object. Therefore, for each object, a complete target intelligent network does not need to be separately designed, and training costs and overheads can be reduced. In addition, for each object, there is a particular sub-network. In this case, the particular sub-network may be separately trained based on a feature of each object, so that network performance and a real-time requirement can also be ensured as much as possible.

According to a third aspect, an information processing method is provided. The method may include: obtaining information in a communication network; and processing the information by using a target intelligent network, where the target intelligent network includes a first sub-network and a second sub-network, the first sub-network is configured to process a common feature in the information, and the second sub-network is configured to process a non-common feature in the information.

The first sub-network represents a sub-network that is in the target intelligent network and that is configured to process the common feature in the information. It should be understood that the first sub-network does not limit a quantity of sub-networks to be one. For example, the first sub-network may include one or more sub-networks.

The second sub-network represents a sub-network that is in the target intelligent network and that is configured to process the non-common feature in the information. It should be understood that the second sub-network does not limit a quantity of sub-networks to be one. For example, the second sub-network may include one or more sub-networks.

The common feature and the non-common feature mentioned in the technical solution provided in this application are relative concepts, in other words, are classification in a particular scenario; and do not limit to a particular feature (in other words, a particular parameter).

Based on the foregoing technical solution, the first sub-network is configured to process the common feature in the information, in other words, the first sub-network corresponds to the common feature, for example, a feature corresponding to a common environment. Different objects (such as communication devices or communication scenarios) may reuse the first sub-network, and a change frequency thereof does not need to be excessively high. Therefore, complexity and costs can be reduced. The second sub-network is configured to process the non-common feature in the information, in other words, the second sub-network corresponds to the non-common feature. Different objects (such as communication devices or communication scenarios) may separately train and update the second sub-network, in other words, the second sub-network can be trained and updated in a shorter periodicity. Therefore, performance can be ensured as much as possible. In this manner, a tradeoff between performance and complexity can be effectively achieved, and there is more room for performance improvement and complexity reduction.

With reference to the third aspect, in some implementations of the third aspect, the first sub-network is configured to process a common feature of one or more communication devices; or the first sub-network is configured to process a common feature in one or more communication scenarios.

For example, the communication device may be a terminal device, or the communication device may be a network device.

Based on the foregoing technical solution, a plurality of communication devices or a plurality of communication scenarios may share one first sub-network, to reduce complexity.

With reference to the third aspect, in some implementations of the third aspect, the second sub-network is configured to process a non-common feature of one communication device; or the second sub-network is configured to process a non-common feature in one communication scenario.

Based on the foregoing technical solution, each communication device or each communication scenario may have a corresponding second sub-network, so that the second sub-network can be trained and updated based on an actual situation, to ensure performance as much as possible.

According to a fourth aspect, an information processing method is provided. The method may include: obtaining information in a communication network; and processing the information by using a target intelligent network, where the target intelligent network includes a first sub-network and a second sub-network; and the first sub-network corresponds to a plurality of communication devices, and the second sub-network corresponds to one communication device; or the first sub-network corresponds to a plurality of communication scenarios, and the second sub-network corresponds to one communication scenario.

The first sub-network represents a sub-network that is in the target intelligent network and that may correspond to a plurality of communication devices or may correspond to a plurality of communication scenarios. It should be understood that the first sub-network does not limit a quantity of sub-networks to be one. For example, the first sub-network may include one or more sub-networks.

The second sub-network represents a sub-network that is in the target intelligent network and that may correspond to one communication device or may correspond to one communication scenario. It should be understood that the second sub-network does not limit a quantity of sub-networks to be one. For example, the second sub-network may include one or more sub-networks.

Based on the foregoing technical solution, the target intelligent network may include the first sub-network and the second sub-network, the first sub-network corresponds to a plurality of objects (such as a plurality of communication devices or a plurality of communication scenarios), and the second sub-network corresponds to one object (such as one communication device or one communication scenario). Therefore, some communication devices or some communication scenarios may reuse the first sub-network, in other words, a change frequency thereof does not need to be excessively high, so that complexity and costs can be reduced. Different communication devices or different communication scenarios may have respective corresponding second sub-networks, in other words, may separately train and update the second sub-networks. Therefore, performance can be ensured as much as possible. In this manner, a tradeoff between performance and complexity can be effectively achieved, and there is more room for performance improvement and complexity reduction.

With reference to the third aspect or the fourth aspect, in some implementations, classification of the first sub-network and the second sub-network is performed based on one or more of the following: environment data information, sensing signal information, communication device identification information, service type information, or terminal device feedback suggestion information.

With reference to the third aspect or the fourth aspect, in some implementations, information related to the first sub-network and/or the second sub-network is carried in one or more of the following signaling: radio resource control, a media access control-control element, downlink control information, or uplink control information.

With reference to the third aspect or the fourth aspect, in some implementations, the first sub-network corresponds to one or more indexes.

For example, a correspondence between a first sub-network and an index is predefined or preconfigured.

Based on the foregoing technical solution, information about the first sub-network can be learned of by learning of the index corresponding to the first sub-network. For example, the communication device may directly read, based on an ID, a first sub-network corresponding to the ID. For another example, the communication device may apply, based on an ID, to another device (such as a network device) for a first sub-network corresponding to the ID, so that the another device may send, to the communication device, information about the first sub-network corresponding to the ID.

With reference to the third aspect or the fourth aspect, in some implementations, an update periodicity of the first sub-network is different from an update periodicity of the second sub-network.

In this manner, update efficiency can be improved, and update overheads can be reduced.

In a possible design, an update periodicity of the first sub-network is longer than an update periodicity of the second sub-network.

With reference to the third aspect or the fourth aspect, in some implementations, the first sub-network corresponds to a plurality of communication devices; and the first sub-network is obtained by training a part or all of the plurality of communication devices.

In this manner, training of the first sub-network can be flexibly designed.

For example, the first sub-network corresponds to a plurality of terminal devices; and the first sub-network is obtained by training a part or all of the plurality of terminal devices.

With reference to the third aspect or the fourth aspect, in some implementations, the part or all of the communication devices are communication devices indicated by a network device; or the part or all of the communication devices are communication devices determined based on preset information.

For example, a part or all of terminal devices are terminal devices indicated by the network device, or a part or all of terminal devices are terminal devices determined based on preset information.

In a manner, the network device may indicate, in a form of an x-bit (bit) switch, a terminal device that participates in generating a first sub-network, where x is an integer greater than 1 or equal to 1.

In another manner, the network device may send a terminal device list, to indicate a terminal device that participates in generating a first sub-network.

With reference to the third aspect or the fourth aspect, in some implementations, the first sub-network is obtained by training a part of the plurality of communication devices, and the part of the communication devices share the first sub-network with a remaining communication device in the plurality of communication devices.

In this manner, training of the first sub-network can be flexibly designed.

For example, the first sub-network is obtained by training a part of a plurality of terminal devices, and the part of terminal devices share the first sub-network with a remaining terminal device in the plurality of terminal devices.

With reference to the third aspect or the fourth aspect, in some implementations, the method further includes: obtaining information about the first sub-network based on the index corresponding to the first sub-network; or receiving indication information, and obtaining information about the first sub-network based on the indication information, where the indication information indicates the information about the first sub-network.

With reference to the third aspect or the fourth aspect, in some implementations, the common feature includes one or more of the following: geographical location information, delay spread information, Doppler distribution information, or angle distribution information.

According to a fifth aspect, an intelligent network generating method is provided. The method may include: obtaining information about a plurality of sub-networks, where at least two sub-networks correspond to different types of features; and generating, based on the information about the plurality of sub-networks, a target intelligent network used for a communication network.

In an example, the method may include: obtaining information about a first sub-network and a second sub-network, the first sub-network is configured to process a common feature in the information, and the second sub-network is configured to process a non-common feature in the information; and generating, based on the information about the first sub-network and the second sub-network, a target intelligent network used for a communication network.

According to a sixth aspect, an intelligent network generating method is provided. The method may include: obtaining information about a plurality of sub-networks, where a part of sub-networks correspond to a plurality of objects, and a part of sub-networks correspond to one object; and generating, based on the information about the plurality of sub-networks, a target intelligent network used for a communication network.

In an example, the method may include: obtaining information about a first sub-network and a second sub-network, where the first sub-network corresponds to a plurality of objects, and the second sub-network corresponds to one object; and generating, based on the information about the first sub-network and the second sub-network, a target intelligent network used for a communication network.

According to a seventh aspect, an information processing apparatus is provided. The apparatus is configured to perform the methods provided in the first aspect to the sixth aspect. Specifically, the apparatus may include units and/or modules configured to perform the methods provided in the first aspect to the sixth aspect, for example, a processing unit and/or a communication unit.

In an implementation, the apparatus is a communication device. When the apparatus is the communication device, the communication unit may be a transceiver or an input/output interface; and the processing unit may be a processor.

In another implementation, the apparatus is a chip, a chip system, or a circuit used in a communication device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

Optionally, the transceiver may be a transceiver circuit. Optionally, the input/output interface may be an input/output circuit.

According to an eighth aspect, an information processing apparatus is provided, and includes a processor. The processor is coupled to a memory, and may be configured to execute instructions in the memory, to implement a method in the first aspect to the sixth aspect. Optionally, the apparatus further includes a communication interface. The processor is coupled to the communication interface, and the communication interface is configured to perform data and/or instruction transmission with the outside. Optionally, the apparatus further includes the memory.

In an implementation, the apparatus is a communication device. When the apparatus is the communication device, the communication unit may be a transceiver or an input/output interface; and the processing unit may be a processor.

In another implementation, the apparatus is a chip, a chip system, or a circuit used in a communication device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

Optionally, the transceiver may be a transceiver circuit. Optionally, the input/output interface may be an input/output circuit.

According to a ninth aspect, an image processing apparatus is provided. The apparatus includes: a memory, configured to store a program; and a processor, configured to execute the program stored in the memory. When the program stored in the memory is executed, the processor is configured to perform a method in the first aspect to the sixth aspect.

In an implementation, the apparatus is a communication device.

In another implementation, the apparatus is a chip, a chip system, or a circuit used in a communication device.

According to a tenth aspect, this application provides a processor, configured to perform the method provided in each of the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing inputted information, the transceiver obtains/receives the foregoing information, and inputs the foregoing information into the processor. Further, after the transceiver receives the foregoing information, other processing may need to be performed on the foregoing information before the information is inputted into the processor.

Based on the foregoing principle, for example, the obtaining information in a communication network mentioned in the foregoing methods may be understood as receiving inputted indication information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to an eleventh aspect, a computer-readable medium is provided. The computer-readable medium stores program code to be executed by a device, and the program code is used to perform a method provided in the first aspect to the sixth aspect.

According to a twelfth aspect, a computer program product including instructions is provided. When the computer program product runs on a computer, the computer is enabled to perform a method provided in the first aspect to the sixth aspect.

According to a thirteenth aspect, a chip is provided. The chip includes a processor and a communication interface. The processor reads, through the communication interface, instructions stored in a memory, to perform a method provided in the first aspect to the sixth aspect.

Optionally, in an implementation, the chip may further include a memory. The memory stores instructions. The processor is configured to execute the instructions stored in the memory. When the instructions are executed, the processor is configured to perform a method provided in the first aspect to the sixth aspect.

### BRIEF DESCRIPTION OF DRAWINGS

FIG. 1 is a simplified schematic diagram of a communication system applicable to an embodiment of this application;
FIG. 2 is a simplified schematic structural diagram of a communication system applicable to an embodiment of this application;
FIG. 3 is a simplified schematic block diagram of a communication system applicable to an embodiment of this application;
FIG. 4 is a schematic diagram of an ELAA structure;
FIG. 5 is a schematic structural diagram of a deep network model;
FIG. 6 is a schematic diagram of reconstructing CSI by using a conventional solution and a neural network solution;
FIG. 7 is a schematic diagram of comparing performance of using a conventional method to obtain CSI with performance of using a DNN to obtain CSI in a particular channel distribution;
FIG. 8 is a schematic diagram of comparing performance of a solution for a network oriented to multi-distribution training with performance of a solution for a network oriented to single-distribution training;
FIG. 9 is a schematic diagram of an information processing method according to an embodiment of this application;
FIG. 10 is a schematic diagram of a target intelligent network according to an embodiment of this application;
FIG. 11 is a schematic diagram of an information processing method according to another embodiment of this application;
FIG. 12 is a schematic diagram of an information processing method according to still another embodiment of this application;
FIG. 13 to FIG. 16 each show a schematic diagram of a possible use case of a sub-network applicable to an embodiment of this application;
FIG. 17 is a schematic diagram of geographical location-based grouping applicable to an embodiment of this application;
FIG. 18 is a schematic diagram of target intelligent network processing applicable to an embodiment of this application;
FIG. 19 is a schematic block diagram of an information processing apparatus according to an embodiment of this application;
FIG. 20 is another schematic block diagram of an information processing apparatus according to an embodiment of this application;
FIG. 21 is still another schematic block diagram of an information processing apparatus according to an embodiment of this application; and
FIG. 22 is a schematic structural diagram of hardware of a chip according to an embodiment of this application.

### DESCRIPTION OF EMBODIMENTS

The following describes technical solutions of this application with reference to the accompanying drawings.

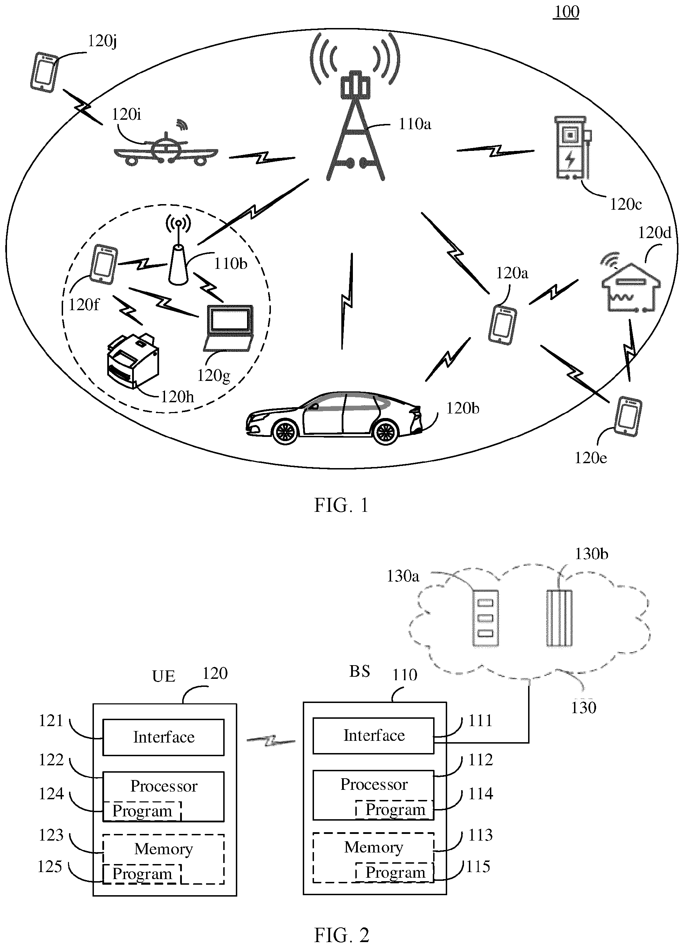

For ease of understanding embodiments of this application, a communication system used in embodiments of this application is described in detail with reference to FIG. 1 to FIG. 3.

FIG. 1 provides a simplified schematic diagram of a communication system to which an embodiment of this application is applied. FIG. 1 is used as an example for description, and this application is not limited thereto. The communication system includes a radio access network 100. The radio access network 100 may be a next generation (such as a 6th generation (6th generation, 6G) or later) radio access network, or a conventional (such as a 5th generation (5th generation, 5G), 4th generation (4th generation, 4G), 3rd generation (3rd generation, 3G), or 2nd generation (2nd generation, 2G)) radio access network. One or more communication apparatuses (120a-120j, collectively referred to as 120) may be connected to each other, or connected to one or more network nodes (110a and 110b, collectively referred to as 110) in the radio access network 100. Optionally, the communication system includes a core network (not shown). A radio access network device is connected to the core network in a wireless or wired manner. The core network may depend on or be independent of a radio access technology used in the radio access network 100. A core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. Optionally, the communication system may further include another network device, for example, a wireless relay device or a wireless backhaul device.

One or more network nodes 110 in the radio access network 100 may be a next generation node, a legacy node, or a combination thereof. The network node is configured to communicate with a communication apparatus and/or another network node. In this application, the network node is sometimes also referred to as a network device. A non-limiting example of the network node is a base station (base station, BS). In this application, the BS may be referenced in a broad sense by using any one of various names, for example, a gNodeB/gNB, an eNodeB/eNB, a Node B, a next generation base station in a 6G mobile communication system, a base station in a future mobile communication system, an access point in a Wi-Fi system, a base transceiver station (Base Transceiver Station, BTS), a transmission reception point (transmission reception point, TRP), a macro base station (Macro eNB, MeNB), a micro base station (Pico eNB, SeNB), a multi-standard radio (Multi-Standard Radio, MSR) node, a home base station, a network controller, an access node, a wireless node, an access node (access point, AP), a transmission node, a transceiver node, a baseband unit (BaseBand Unit, BBU), a remote radio unit (Remote Radio Unit, RRU), an active antenna unit (Active Antenna Unit, AAU), a radio head (Remote Radio Head, RRH), a central unit (central unit, CU), a distributed unit (distributed unit, DU), and a positioning node. The base station may be a macro base station, a micro base station, a relay node, a donor node, or the like, or a combination thereof. The base station may alternatively be an apparatus built in the foregoing device, for example, a communication module, a modem, or a chip in the foregoing device. A specific technology and a specific device form that are used by the radio access network device are not limited in embodiments of this application. The base station may support networks of a same access technology or different access technologies. For ease of description, an example in which a network node is a base station (BS) is used below for description.

The network node may be fixed or mobile. For example, the network nodes 110a and 110b are stationary and are responsible for wireless transmission and reception in one or more cells from the communication apparatus 120. An aircraft (such as a helicopter or an uncrewed aerial vehicle) 120i shown in FIG. 1 may be configured to act as a mobile BS, and one or more cells may move based on a location of the aircraft 120i. In another example, the helicopter or the uncrewed aerial vehicle (120i) may be configured as a communication apparatus for communicating with the network node 110a.

The communication apparatus 120 is configured to connect a person, a thing, a machine, and the like. The communication apparatus 120 may be widely used in various scenarios, for example, cellular communication, device-to-device (device-to-device, D2D), vehicle to everything (vehicle to everything, V2X), peer to peer (Peer to Peer, P2P), machine to machine (Machine to Machine, M2M), machine-type communications (Machine-type Communications, MTC), internet of things (internet of things, IoT), virtual reality (virtual reality, VR), augmented reality (augmented reality, AR), industrial control, autonomous driving, telemedicine, smart grid, smart furniture, smart office, smart wearable, smart transportation, smart city, drone, robot, remote sensing, passive sensing, positioning, navigation and tracking, and self-delivery. The communication apparatus 120 may be a 3rd generation partnership project (3rd Generation Partnership Project, 3GPP) standard user equipment (user equipment, UE), fixed device, mobile device, handheld device, wearable device, terminal device, cellular phone, smartphone, SIP phone, tablet computer, notebook computer, computer having a wireless transceiver function, smart book, vehicle, satellite, global positioning system (Global Positioning System, GPS) device, target tracking device, aircraft (such as an uncrewed aerial vehicle, a helicopter, a plurality of helicopters, four helicopters, or an airplane), ship, remote control device, smart home device, or industrial device, or an apparatus (such as a communication module, a modem, or a chip in the foregoing device) built in the foregoing device. For ease of description, the communication apparatus 120 is described below by using a terminal, a terminal device, or a UE as an example.

In some embodiments, the UE may be configured to act as a base station. For example, the UE may act as a scheduling entity that provides a sidelink signal between UEs in a scenario such as V2X, D2D, or P2P. As shown in FIG. 1, a UE 120a and a UE 120b may communicate with each other by using a sidelink signal. The UE 120a and a UE 120d communicate with each other without a need to relay a communication signal through the network node 110a.

In embodiments of this application, a function of the base station may be performed by a module (such as a chip) in the base station, or may be performed by a control subsystem including a base station function. For example, the control subsystem including the base station function may be a control center in the foregoing terminal application scenarios such as smart grid, industrial control, smart transportation, and smart city. A function of the terminal may alternatively be performed by a module (such as a chip or a modem) in the terminal, or may be performed by an apparatus including the function of the terminal.

FIG. 2 provides a simplified schematic structural diagram of a communication system. FIG. 2 is used as an example for description, and this application is not limited thereto. For simplicity, FIG. 2 shows only the network node 110 (such as a BS 110), the communication apparatus 120 (such as a UE 120), and a network 130. The BS 110 includes an interface 111 and a processor 112. The processor 112 may optionally store a program 114. The BS 110 may optionally include a memory 113. The memory 113 may optionally store a program 115. The UE 120 includes an interface 121 and a processor 122. The processor 122 may optionally store a program 124. The LTE 120 may optionally include a memory 123. The memory 123 may optionally store a program 125. These components work together, to provide various functions described in this application. For example, the processor 112 and the interface 121 work together, to provide a wireless connection between the BS 110 and a LTE 220. The processor 122 and the interface 121 work together, to implement downlink transmission and/or uplink transmission of the UE 120.

The network 130 may include one or more network nodes 130a and 130b, to provide a core network function. The network nodes 130a and 130b may be next generation (such as 6G or later) core network nodes, or conventional (such as 5G, 4G, 3G, or 2G) core network nodes. For example, the network nodes 130a and 130b may be access and mobility management functions (Access and Mobility Management Functions, AMFs), mobility management entities (mobility management entities, MMEs), or the like. The network 130 may further include a public switched telephone network (Public Switched Telephone Network, PSTN), a packet data network, an optical network, one or more network nodes in an IP network, a wide area network (Wide Area Network, WAN), a local area network (Local Area Network, LAN), a wireless local area network (Wireless Local Area Network, WLAN), a wired network, a wireless network, a metropolitan area network, and another network, so that communication can be performed between LTEs 120 and/or BSs 110.

A processor (such as the processor 112 and/or the processor 122) may include one or more processors and is implemented as a combination of computing devices. The processor (such as the processor 112 and/or the processor 122) may separately include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, or other proper hardware or firmware and/or a combination of hardware and software, to perform various functions described in this disclosure. The processor (such as the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the BS 110 and/or the UE 120 to perform a software program and process data in the software program. A part of the processor may further include a non-volatile random access memory. For example, the processor may further store information about a device type.

An interface (such as the interface 111 and/or 121) may include a device used for implementing communication with one or more computers. For example, in some embodiments, the interface may include a wire used for coupling a wired connection, or a terminal and/or a pin used for coupling a wireless transceiver and used for a wireless connection. In some embodiments, the interface may include a transmitter, a receiver, a transceiver, and/or an antenna. The interface may be configured to use any available protocol (such as the 3GPP standard) for communication between computer devices (such as UEs, BSs, and/or network nodes).

A program in this application represents software in a broad sense. A non-limiting example of the software includes program code, a program, a subprogram, instructions, an instruction set, code, a code segment, a software module, an application program, a software application program, or the like. The program may run in a processor and/or a computer. In this way, the BS 110 and/or the UE 120 perform various functions and/or processes described in this application.

A memory (such as the memory 113 and/or the memory 123) may store data needed by the processors 112 and 122 to run software. The memories 113 and 123 may be implemented by using any proper storage technology. For example, the memory may be any available storage medium that can be accessed by the processor and/or the computer. A non-limiting example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification aims to include but is not limited to these memories and any memory of another proper type.

The memory (such as the memory 113 and/or the memory 123) and the processor (such as the processor 112 and/or the processor 122) may be separately disposed or integrated. The memory may be configured to be connected to the processor, so that the processor can read information from the memory, and store and/or write information into the memory. The memory 113 may be integrated into the processor 112. The memory 123 may be integrated into the processor 122. The memory (such as the memory 113 and/or the memory 123) and the processor (such as the processor 112 and/or the processor 122) may be disposed in an integrated circuit (for example, the integrated circuit may be disposed in a UE, a BS, or another network node).

According to some embodiments, the various functions described in this application may be implemented by an apparatus (such as a UE, a BS, and/or any network node), including one or more modules, components, circuits, pieces of software, elements, and the like (collectively referred to as elements) for performing the various functions. These elements may be implemented using hardware, software, firmware, and/or a combination thereof.

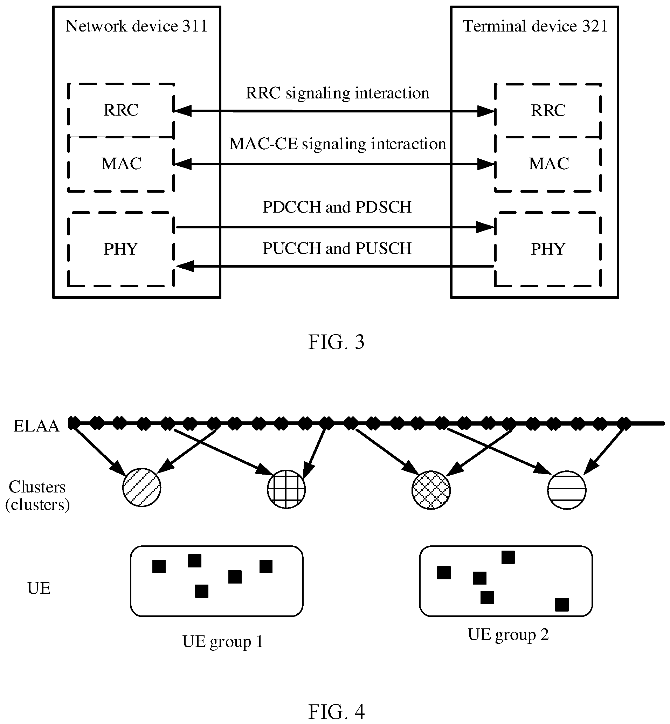

FIG. 3 provides a simplified schematic block diagram of a communication system. FIG. 3 is used as an example for description, and this application is not limited thereto. The wireless communication system may include at least one network device, for example, a network device 311 shown in FIG. 3 (which may be a network node (such as the BS 110) in FIG. 1 and FIG. 2). The wireless communication system may further include at least one terminal device, for example, a terminal device 321 shown in FIG. 3 (which may be a communication apparatus (such as the UE 120) in FIG. 1 and FIG. 2). A plurality of antennas may be configured for each of the network device and the terminal device. The network device and the terminal device may communicate with each other by using a multi-antenna technology.

For example, the network device and the terminal device (such as the network device 311 and the terminal device 321) may receive and send RRC signaling through a radio resource control (radio resource control, RRC) signaling interaction module. For example, the network device and the terminal device (such as the network device 311 and the terminal device 321) may receive and send media access control-control element (media access control-control element, MAC CE) signaling through a media access control (media access control, MAC) signaling interaction module. For example, the network device and the terminal device (such as the network device 311 and the terminal device 321) may receive and send signaling and data through a physical (physical layer, PHY) layer, for example, uplink control signaling (uplink control information, UCI) (such as a physical uplink control channel (physical uplink control channel, PUCCH)), downlink control signaling (downlink control information, DCI) (such as a physical downlink control channel (physical downlink control channel, PDCCH)), uplink data (such as a physical uplink shared channel (physical uplink shared channel, PUSCH), and downlink data (such as a physical downlink shared channel (physical downlink shared channel, PDSCH)).

The technical solutions in embodiments of this application may be applied to a waveform system in a wireless communication network, for example, a single carrier waveform system, an orthogonal frequency division multiplexing (orthogonal frequency division multiplexing, OFDM) waveform system, or another waveform system. An architecture in embodiments of this application may be the same as a communication architecture in an existing standard, for example, a conventional single-carrier or OFDM system, or may be another different communication architecture. This is not limited herein. For example, an existing communication architecture is used as an example. A series of processing is performed on a signal at a transmitting end (such as the network device 311). For example, a discrete Fourier transformation (discrete fourier transformation, DFT) operation is performed on the signal, subcarrier mapping is performed on a signal after DFT, inverse fast Fourier transform (inverse fast fourier transform, IFFT) is performed, and a cyclic prefix (cyclic prefix, CP) is added. Correspondingly, a process of inverse operation processing, such as CP removal, DFT, subcarrier demapping/equalization, and IFFT, is performed at a receiving end (such as the terminal device 321).

In addition, the technical solutions in embodiments of this application may be applicable to any learning that is based on an intelligent network module and that is in a network architecture. For example, channel estimation, signal detection, precoding designing, encoding/decoding, modulation/demodulation, and the like are implemented based on an intelligent network (such as a neural network, a decision tree, or a deep forest network).

For ease of understanding of embodiments of this application, several basic concepts in embodiments of this application are briefly described. It should be understood that the basic concepts described below are briefly described by using a basic concept specified in a current protocol or a currently used basic concept as an example, and names and specific concepts of the basic concepts do not limit the protection scope of embodiments of this application.

### 1. Artificial general intelligence (artificial general intelligence, AGI)

The AGI is general-purpose artificial intelligence (artificial intelligence, AI). The AGI not only has some AIfunctions, for example, existing key functions such as knowledge expression, reasoning, and decision-making, but also has quick learning and generalization capabilities. To be specific, an intelligent agent can effectively build its own knowledge system based on a logical mapping relationship between a behavior and an action, to form experience to adapt to an environment and survive.

Conventional artificial intelligence has two key capabilities: perception and decision-making. The perception means that a feature of the environment that can be felt and understood. The decision-making means that a success probability can be maximized based on a target to take an action. However, as application fields of neural networks become wider, people pay more attention to universality and generalization capabilities of the neural networks. The machine intelligent agent spontaneously builds the unique knowledge system, and forms experience to adapt to the environment. In other words, it is intended to enable the artificial intelligence to learn, based on a same set (in other words, a same type) of algorithm, to process various tasks, instead of training any single task from the beginning for survival. This is a main purpose of an AGI subject study.

Currently, several feasible directions in which the AGI may be implemented are simply classified as follows.

Generalized reinforcement learning: A generalized reinforcement form reflects how humans obtain information and convert it into knowledge and skills, to finally form a kind of experience and common sense that are solidified and retained. In this way, advanced semantic information comes into being, and is reused and spread.

Meta learning (meta learning): The meta learning is learning to learn (learning to learn). The meta-learning essentially provides a method for extracting different information for interrelation, but not just a manner of learning to learn.

Transfer learning (transfer learning): Time consumption and power consumption of the artificial intelligence in network training in real network deployment will be one of application bottlenecks thereof. Therefore, network transfer and reuse will be one of keys in an application process. This requires that a network module have a self-transfer function, so that fast deployment and application can be enabled in a similar scenario.

Hierarchy model (hierarchy model): The neural network is improved in terms of a network structure, and layering thereof is not just in timescale. Neural network modularization is a trend. It is expected that one neural network can simultaneously process various types of inputs, for example, voice, vision, and control inputs. Modularization is similar to different functional areas of a brain, and a lot of information may be shared and transferred between the functional areas.

### 2. Extremely large antenna array

As wide coverage and a large capacity have become main features of a modern communication system, a multi-input multi-output (multi-input multi-output, MIMO) technology that can significantly improve a system capacity stands out in a plurality of wireless solutions. By using a space-dimension resource and without increasing system bandwidth, as a multi-antenna system with a larger dimension, massive multi-input multi-output (massive MIMO) can enable a signal to obtain, in space, an array gain, multiplexing and diversity gains, and an interference cancellation gain, so that a capacity and spectral efficiency of the communication system are multiplied.

The extremely large antenna array (extremely large antenna array, ELAA) is an important direction for further antenna scale evolution. In a system of the ELAA, it is different from a conventional multi-antenna form that, ELAA antennas are disposed in an extremely large area, for example, an external wall of a shopping mall or a stadium. In this case, one of biggest differences between the ELAA and conventional MIMO is that an antenna visible domain of a terminal is no longer an entire antenna installation platform, and a part of terminals may see only a part of the antenna installation platform, and different multipath clusters experienced by different terminal groups may also on longer be the same. In an example for description, FIG. 4 is a schematic diagram of an ELAA structure. In the example shown in FIG. 4, an antenna visible domain of a terminal is no longer an entire ELAA, and the terminal may see only a part of an antenna installation platform, namely, a multipath cluster (cluster). Different terminal groups experience different multipath clusters.

### 3. Deep neural network

In many research directions of machine learning, a neural network algorithm becomes a technical method with a great potential because of its capability, of infinite approximation to any continuous function, given by a universal approximation theorem (universal approximation theorem).

The deep neural network (deep neural network, DNN) is generally a multi-layer structure. Increasing a depth and a width of a neural network can improve its expressive capability and provide more powerful information extraction and abstract modeling capabilities to a complex system.

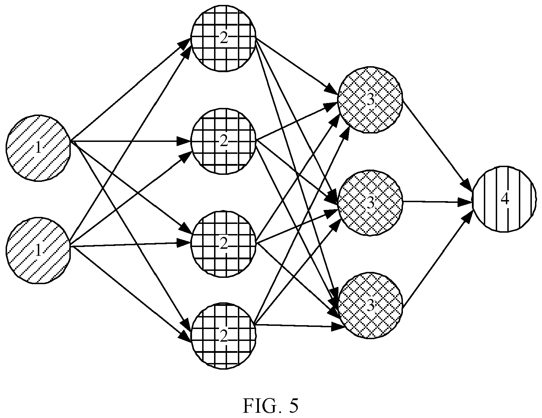

Classical deep neural networks include: a fully connected network (fully connected network, FCN), a recurrent neural network (recurrent neural network, RNN) that aims to model a time series change, and a convolutional neural network (convolutional neural network, CNN) that is proposed for simulating a human vision neural system. In an example for description, FIG. 5 is a schematic structural diagram of a deep network model.

The deep network model may include an input layer, a hidden layer, and an output layer. As shown in FIG. 5, circles marked with 1 represent the input layer, circles marked with 2 represent the hidden layer, and circles marked with 3 represent the output layer. A function of the input layer includes inputting to-be-processed information. The DNN generally includes more than one hidden layer, and a function of the hidden layer includes extracting feature information to different extents. A function of the output layer includes mapping needed output information from the extracted feature information. Circle marks show neurons at the layers. A neuron connection mode of each layer and an activation function used by each layer determine an expression function of the neural network.

It should be understood that FIG. 5 is only an example for description, and does not constitute a limitation to this. In an actual operation, different deep network models are applicable to different problems. A proper deep network model may be selected based on model performance and complexity.

The DNN has been widely used in image, voice, and video processing fields nowadays. Based on its advantages in feature extraction and mining, many academic researches turn attention to application of a deep learning network in a wireless communication physical layer (such as MIMO). For example, in the deep learning network, there are many researches on channel estimation, MIMO channel acquisition, MIMO detection, precoding designing, and reference signals.

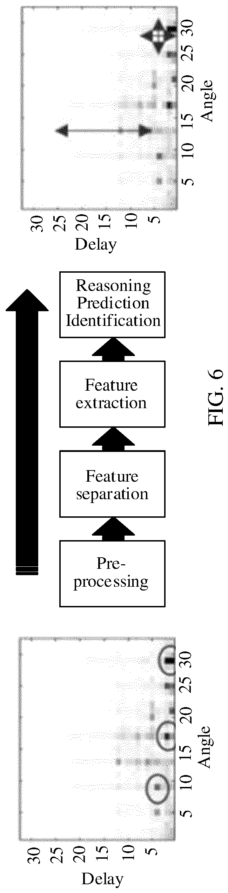

The MIMO channel acquisition is used as an example. In recent years, the academic community has tried a plurality of channel state information (channel state information, CSI) compression and reconstruction solutions implemented based on steps such as feature extraction, compression, decompression, and feature restoration. A main idea thereof is as follows: CSI information is considered as an image, and feature extraction, compression, and transmission are performed on the image based on an extraction capability of the neural network. In an example for description, FIG. 6 is a schematic diagram of reconstructing CSI by using a conventional solution and a neural network solution.

As shown in FIG. 6, in a CSI reconstruction process, if the conventional solution is used, processing, for example, including compression (compress) processing and feedback (feedback) processing, is mainly performed on a part of particular angle-delay pairs (particular angle-delay pairs) of a channel in angle-delay domain. The neural network solution, such as the DNN, may be used to perform high-dimensional feature conversion on angle and delay information, and perform compression and processing in a higher dimension.

However, if the neural network algorithm does not understand a model (in other words, the entire neural network is similar to a black box), in other words, feature conversion of each hidden layer in the network cannot be learned of except that there are definite input and output requirements, when a feature is replaced, for example, a scenario, a compression rate, or a quantization algorithm is replaced, overall network training needs to be performed again to meet a latest feature requirement.

There may be the following two solutions for using the DNN in a wireless communication scenario.

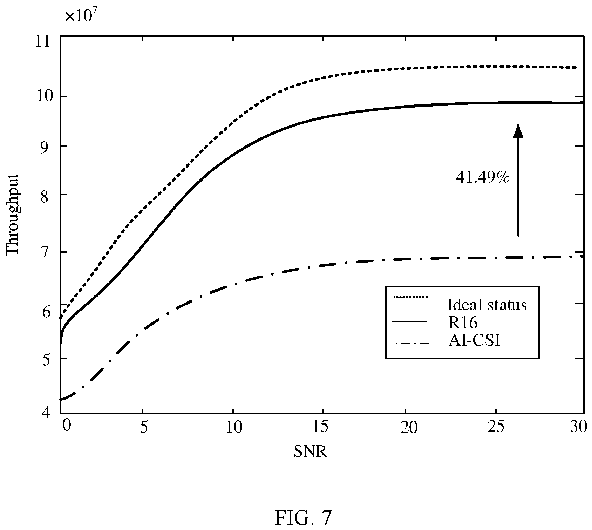

One solution is a network oriented to single-distribution training (such as a UE-specific (LTE-specific) network), to be specific, accurate feature extraction is performed for a type of distribution. In an example for description, FIG. 7 is a schematic diagram of comparing performance of using a conventional method to obtain CSI with performance of using a DNN to obtain CSI in a particular channel distribution. As shown in FIG. 7, in a type of particular channel distribution, the performance of using a conventional method (such as 3GPP standard Release 16 (Release 16, R16)) to obtain CSI is compared with the performance of using a DNN to obtain CSI (DNN-based CSI). In FIG. 7, a horizontal coordinate represents a signal-to-noise ratio (signal-noise ratio, SNR), and a vertical coordinate represents a throughput (throughput). It can be learned from FIG. 7 that in a type of particular channel distribution, the DNN-based CSI obtaining has a great advantage compared with the conventional method.

The other solution is a network oriented to multi-distribution training, namely, a generalized (generalized) network. A feature of the network is that the network is based on a preset network and is configured on each terminal in a live network. In this case, user-specific network training is not needed any longer.

However, for the network oriented to single-distribution training, it means that in wireless communication, if no cost is considered, targeted network and algorithm designing may be performed for a particular distribution (such as a channel scenario at a moment) of a UE, and good performance can be obtained. In addition, the performance may deteriorate sharply after the particular distribution is deviated from. However, particularity of the wireless communication scenario is comprehensively considered, for example, factors such as a low delay requirement, stricter power consumption and costs requirements, and a limited operational capability of the user terminal. It is difficult to put a UE-specific DNN network design idea into practice.

For the network oriented to multi-distribution training, namely, the generalized network, both costs and power consumption are greatly reduced, and the low delay requirement can also be met. However, in this case, the network needs to face various channel scenarios. Reasoning performance of the network will deteriorate sharply due to diversity of samples.

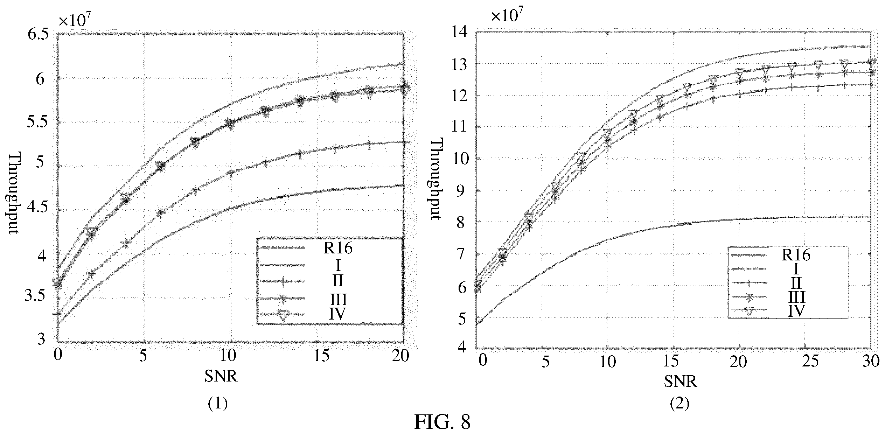

The using a DNN to obtain CSI (which may alternatively be denoted as AI-CSI) is used as an example. FIG. 8 shows performance of the foregoing two solutions. (1) in FIG. 8 corresponds to the solution for the network oriented to multi-distribution training (namely, the generalized network), and (2) in FIG. 8 corresponds to the solution for the network oriented to single-distribution training. Features of various types (types) in FIG. 8 are shown in Table 1. In machine learning, samples are generally divided into three parts: a train set (train set), a validation set (validation set), and a test set (test set). The train set is used to build a model, and the test set is used to check performance of a finally selected optimal model.

**Table 1**

| Dataset Type (dataset type) | Dataset features (dataset features) |
|---|---|
| Dataset type I (that is, corresponding to I in FIG. 8) | The training set and the test set use a same channel type. |
| Dataset type II (that is, corresponding to II in FIG. 8) | Training set: randomly hybrid CDLA100/A300B100/B300 |
| Dataset type III (that is, corresponding to III in FIG. 8) | Training set: Set-random hybrid channels (such as CDLA100/A300) with a same channel type but different delays |
| Dataset type IV (that is, corresponding to IV in FIG. 8) | Training set: Set-random hybrid channels (such as CDLA100/B100) with a same delay but different channel types |

CDL in Table 1 represents a cluster delay line (cluster delay line, CDL). A represents a channel type, and B also represents a channel type. The number "100" or "300" represents a value of an average delay.

It can be learned from FIG. 8 that, for the network oriented to multi-distribution training (namely, the generalized network) and the network oriented to single-distribution training, the former (namely, the network oriented to multi-distribution training) is easy to implement, but has a performance loss of nearly 20% compared with the latter (namely, the network oriented to single-distribution training); and the latter has very good performance but is difficult to implement. For a communication problem for which a terminal side needs to participate in learning, especially an end-to-end learning problem, there is a large difficulty to deploy the live network. One of bottlenecks is the operational capability of the user terminal.

It is very difficult to achieve a tradeoff between performance and complexity in the foregoing two solutions.

Embodiments of this application provide a solution, to achieve a good tradeoff between the performance and the complexity, adapt to special requirements of the wireless communication (such as complex and diversified scenarios, a low delay, and high reliability), and improve implementability of using an intelligent network in a communication network.

The following describes in detail embodiments provided in this application with reference to the accompanying drawings.

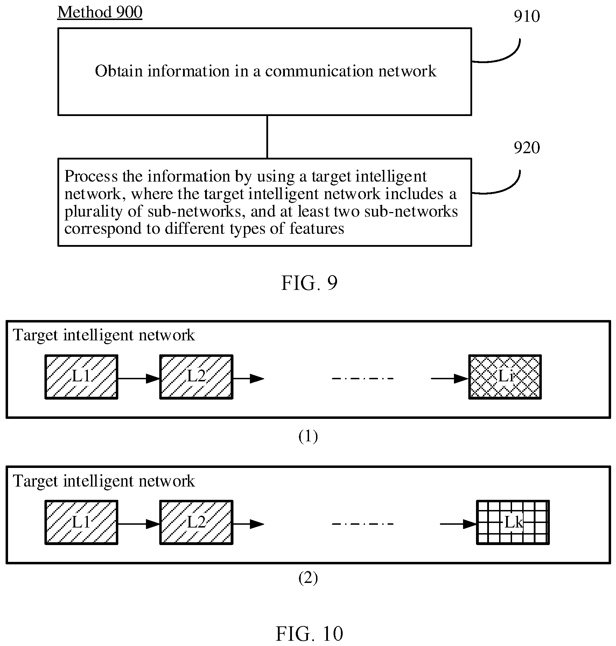

FIG. 9 is a schematic diagram of an information processing method 900 according to an embodiment of this application. The method 900 may include the following steps.

910: Obtain information in a communication network.

920: Process the information by using a target intelligent network, where the target intelligent network includes a plurality of sub-networks, and at least two sub-networks correspond to different types of features.

In this embodiment of this application, the information in the communication network is inputted into the target intelligent network, and the target intelligent network processes the information. In other words, a feature in the communication network is captured, processed, or grabbed by using the target intelligent network. For example, the information in the communication network is considered as an image, and feature extraction processing is performed on the image based on an extraction capability of the target intelligent network.

An intelligent network may be referred to as an intelligent module, a model, or a "black box", and may represent a network with a machine learning function, for example, an artificial intelligence network. For differentiation, an intelligent network that is used in the communication network and that is provided in this embodiment of this application is denoted as the target intelligent network.

In an example for description, FIG. 10 is a schematic diagram of a target intelligent network according to an embodiment of this application.

The target intelligent network includes a plurality of sub-networks. As shown in FIG. 10(1), the target intelligent network may include sub-networks L1, L2, ..., and Li. As shown in FIG. 10(2), the target intelligent network may include sub-networks L1, L2, ..., and Lk.

At least two sub-networks correspond to different types of features. Alternatively, it may be represented as that at least two types of sub-networks correspond to different types of features, in other words, at least two parts of sub-networks correspond to different types of features. That at least two sub-networks correspond to different types of features represents that a sub-network captures or processes a feature corresponding to the sub-network, in other words, different types of features are processed by using sub-networks corresponding to the features.

For example, as shown in FIG. 10(1), L1 and Li correspond to different types of features, L2 and Li correspond to different types of features, and L1 and L2 may correspond to a same type of feature. Alternatively, it may be understood that L1 and L2 are used as a same type of sub-network, Li is used as another type of sub-network, and the two types of sub-networks correspond to different types of features. L1 and L2 process a same type of feature, and Li processes another type of feature. In other words, one type of feature is processed by L1 and L2, and another type of feature is processed by Li. In other words, L1 and L2 process a part of features, and Li processes another part of features.

For another example, as shown in FIG. 10(2), L1 and Lk correspond to different types of features, L2 and Lk correspond to different types of features, and L1 and L2 may correspond to a same type of feature. Alternatively, it may be understood that L1 and L2 are used as a same type of sub-network, Lk is used as another type of sub-network, and the two types of sub-networks correspond to different types of features. L1 and L2 process a same type of feature, and Lk processes another type of feature. In other words, one type of feature is processed by L1 and L2, and another type of feature is processed by Lk. In other words, L1 and L2 process a part of features, and Lk processes another part of features.

The target intelligent network provided in this application may be considered as a hierarchical network architecture. The target intelligent network includes a plurality of sub-networks, and at least two sub-networks correspond to different types of features. In one aspect, in a wireless communication network, although capabilities of terminal devices are different, service characteristics of the terminal devices may be similar, and even different features of some terminal devices have a grouping or clustering characteristic. For terminal devices in different groups, a feature difference is large. For terminal devices in a same group, a feature difference is small. In another aspect, for an intelligent network (such as a neural network), the intelligent network can classify features for processing. For example, in computer vision, a low convolution layer of a deep neural network model captures low-level image features, for example, edge information and a color. Such features are almost unchanged in different classification tasks. A high-layer feature truly implements differentiation. A high convolution layer captures details that are more complex, for example, a body part, a face, and another combined feature.

Therefore, in this application, a network architecture with a hierarchical mechanism is designed by using a feature grouping characteristic of the wireless communication network and a classification processing characteristic of the intelligent network. According to this solution, flexible training and use can be performed based on a feature corresponding to each sub-network. For example, for a plurality of objects, similar features of the plurality of objects may be processed by using a same sub-network, so that complexity can be reduced, and training overheads can be reduced. For the plurality of objects, a particular feature of each object may be processed by using a different sub-network. For example, each object separately trains and updates or designs a sub-network corresponding to this type of feature, so that performance can be ensured as much as possible. Therefore, based on this solution, through feature layering, not only a feature of each level can be effectively grasped and extracted, to ensure training performance, but also training overheads can be minimized, thereby improving training efficiency.

Different types of features may include features with different similarities between different objects. For example, the different types of features may include features with different similarities between different communication devices (such as a terminal device or a network device), or may include features with different similarities in different communication scenarios (such as different channel scenarios or different distributions), or may include features with different similarities in different processing objects. The processing object is described below.

For example, the example shown in FIG. 4 is used as an example. When CSI information is processed by using the target intelligent network, an angle and a delay of the CSI information may be used as a type of feature, and this type of feature corresponds to a sub-network, in other words, the same sub-network processes angle and delay information. Alternatively, an angle and a delay of the CSI information may be used as two types of features, in other words, one sub-network processes angle information, and another sub-network processes delay information.

It should be understood that when information in a communication network is processed by using the target intelligent network, how to classify features of the information is not strictly limited. Bases for feature classification may be different in different scenarios, and a same feature may be different in different scenarios.

By way of example, and not limitation, different types of features may include a common feature and a non-common feature. In this example, the target intelligent network may include a plurality of sub-networks, a part of sub-networks correspond to the common feature, and the other part of sub-networks correspond to the non-common feature.

The following describes the common feature and the non-common feature.

### 1. Common feature

The common feature may also be referred to as, for example, a shared feature.

The common feature may represent that this type of feature does not vary with different communication devices, in other words, this type of feature does not change evidently or differ greatly between different communication devices. For example, for a plurality of communication devices in a scenario, a same or similar feature, or a feature that does not change evidently or differ greatly between the plurality of communication devices may be considered as a common feature.

Alternatively, the common feature may represent that this type of feature does not vary with different communication scenarios (such as different channel distributions), in other words, this type of feature does not change evidently or differ greatly between different communication scenarios. For example, a communication device is in a plurality of types of channel distributions, and a same or similar feature, or a feature that does not change evidently or differ greatly of the communication device in the plurality of types of channel distributions may be considered as a common feature.

Alternatively, the common feature may represent that this type of feature does not vary with different processing objects, in other words, this type of feature does not change evidently or differ greatly between different processing objects. For example, for a plurality of processing objects in a scenario, a same or similar feature, or a feature that does not change evidently or differ greatly between the plurality of processing objects may be considered as a common feature.

### 2. Non-common feature

The non-common feature may also be referred to as, for example, a private feature or a particular feature.

The non-common feature may represent that this type of feature varies with different communication devices, in other words, this type of feature changes evidently or differs greatly between different communication devices. For example, for a plurality of communication devices in a scenario, a different feature, or a particular feature (or a detail feature) dedicated to a communication device, or a feature that changes evidently or differs greatly between the plurality of communication devices may be considered as a non-common feature.

Alternatively, the non-common feature may represent that this type of feature varies with different communication scenarios, in other words, this type of feature changes evidently or differs greatly between different communication scenarios. For example, if a communication device is in a plurality of types of channel distributions, a different feature, or a particular feature (or a detail feature) dedicated to a channel distribution, or a feature that changes evidently or differs greatly of the communication device in the plurality of types of channel distributions may be considered as a non-common feature.

Alternatively, the non-common feature may represent that this type of feature varies with different processing objects, in other words, this type of feature changes evidently or differs greatly between different processing objects. For example, for a plurality of processing objects in a scenario, a different feature, or a particular feature (or a detail feature) dedicated to a processing object, or a feature that changes evidently or differs greatly between the plurality of processing objects may be considered as a non-common feature.

It should be understood that the common feature and the non-common feature are merely names for differentiation, and the names thereof do not constitute a limitation to the protection scope of embodiments of this application.

In addition, it should be further understood that the common feature and the non-common feature mentioned in this application are relative concepts, in other words, are classification in a particular circumstance and may relatively vary in different circumstances; and do not limit a particular feature (in other words, a particular parameter).

In a possible case, a same feature (in other words, a same parameter, such as an angle or a delay, for information) is classified differently in different scenarios. For example, when information about a communication device 1 and a communication device 2 is processed in a scenario 1, some features in the information about the communication device 1 and the communication device 2 may be considered as common features, and some features may be considered as non-common features. When the information about the communication device 1 and the communication device 2 is processed in a scenario 2, features that are common features may be different from the features that are the common features in the scenario 1, and features that are non-common features may be different from the features that are non-common features in the scenario 1. It is assumed that in a scenario, for different communication devices, a corresponding time domain change is evident, and a corresponding frequency domain change is not evident. In this scenario, a frequency domain feature corresponding to the communication devices may be considered as a common feature, and a time domain feature corresponding to the communication devices may be considered as a non-common feature. It is assumed that in another scenario, for different communication devices, a corresponding frequency domain change is evident, and a corresponding time domain change is not evident. In this scenario, a frequency domain feature corresponding to the communication devices may be considered as a common feature, and a frequency domain feature corresponding to the communication devices may be considered as a non-common feature.

In still another possible case, for different communication devices, a same feature is classified differently in a same scenario. For example, when the information about the communication device 1 and the communication device 2 is processed in a scenario, some features in the information about the communication device 1 and the communication device 2 may be considered as common features, and some features may be considered as non-common features. When information about a communication device 3 and a communication device 4 is processed in the same scenario, common features and non-common features of the communication device 3 and the communication device 4 may be different from the common features and the non-common features of the communication device 1 and the communication device 2.

FIG. 4 is used as an example. In a scenario, when information about a plurality of LTEs in a LTE group 1 is processed, because an angle and delay distribution difference inside the group is small, an angle and a delay may be considered as common features, in other words, angle and delay information of the plurality of LTEs may be processed by using a first sub-network. In a scenario, when information about a LTE in the LTE group 1 and information about a LTE in a LTE group 2 are processed, because an angle and delay distribution difference between different groups is large, an angle and a delay may be considered as non-common features, in other words, angle delay information of the LTE in the LTE group 1 is processed by using a second sub-network, and angle delay information of the LTE in the LTE group 2 is processed by using another second sub-network.

It should be understood that the foregoing is merely an example for description, and this is not limited. When information in wireless communication is processed by using the target intelligent network, any solution in which different features of the information are processed by using a plurality of sub-networks in a manner of division of work falls within the protection scope of embodiments of this application.

It should be further understood that the sub-network is merely an example for description, and a name of the sub-network does not constitute a limitation to the protection scope of embodiments of this application. For example, the sub-network may also be referred to as a network, the sub-network may be referred to as a module, the sub-network may be referred to as a component, the sub-network may be referred to as a layer, or the like. It may be understood that any name that can represent a meaning that is the same as or similar to a meaning of the sub-network is applicable to embodiments of this application. For the purpose of uniformity, the following uses the sub-network as an example for description.

It should be further understood that, in actual application, features may be classified into a plurality of types of features based on similarities of the features. Features of different communication devices are used as an example. Different types of features may include, for example, three types of features, which are respectively denoted as a first type of feature, a second type of feature, and a third type of feature. A similarity of the first type of feature is the largest. For example, a feature with a smallest feature difference between different communication devices belongs to the first type of feature. A similarity of the third type of feature is the smallest. For example, a feature with a largest feature difference between different communication devices belongs to the third type of feature. A similarity of the second type of feature is between the similarity of the first type of feature and the similarity of the second type of feature. The first type of feature corresponds to a sub-network, the second type of feature corresponds to another sub-network, and the third type of feature corresponds to still another sub-network. In actual use, update periodicities of sub-networks corresponding to various types of features may be different. For example, an update periodicity of the sub-network corresponding to the first type of feature may be the longest, and an update periodicity of the sub-network corresponding to the third type of feature may be the shortest.

It should be further understood that the foregoing classification into the plurality of types of features based on the similarities of the features, such as the classification into the common feature and the non-common feature, is merely an example for description, and this is not limited. In the future, any manner of classifying features based on another factor falls within the protection scope of embodiments of this application. For example, the features may be classified as features in at least one of time domain, space domain, frequency domain, and delay domain.

It should be further understood that feature classification is not strictly limited in embodiments of this application. For example, feature classification or definition may be performed by using one or more modules independent of a sub-network. For example, during information inputting, the module may be used to automatically classify features, and respectively input different types of features into corresponding sub-networks. For another example, the sub-networks may respectively extract features corresponding to the sub-networks. For example, when entire information is inputted into a neural network, and the sub-networks are capable of extracting features corresponding to the sub-networks for processing. This is not limited.

It should be further understood that in actual application, the target intelligent network may include two or more sub-networks.

It should be further understood that each sub-network may be considered as an independent network, in other words, the target intelligent network may be a concept defined for description. In other words, the sub-networks are considered as independent sub-networks, and the plurality of independent sub-networks are considered as forming a target intelligent network. Alternatively, the sub-networks may be considered as a part of the target intelligent network.

It should be further understood that the target intelligent network may be designed for different processing objects, for example, defined, constructed, and trained for different processing objects. The processing object may be, for example, channel state information processing, encoding/decoding processing, modulation/demodulation processing, or channel encoding/decoding. Accordingly, there may be a target intelligent network corresponding to the CSI processing, a target intelligent network corresponding to the encoding/decoding processing, a target intelligent network corresponding to the modulation/demodulation processing, or the like. One processing object may correspond to one or more target intelligent networks. A terminal side and a network side may have respective corresponding target intelligent networks, or a terminal side and a network side may have a common target intelligent network.

In addition, the foregoing provides example descriptions of the different processing objects mainly with reference to a conventional wireless communication network. This is not limited. The target intelligent network provided in this application may correspond to, in other words, be used for any processing object in a current or future wireless communication network. For example, a definition of a processing object may be different from that in an existing classification manner. For example, a processing object may be any combination of objects such as CSI processing, encoding/decoding processing, modulation/demodulation processing, channel encoding/decoding, channel estimation, and data detection. For example, in a future wireless communication network, a receiving end may process, by using one module, all processes from signal receiving to decoding. In this case, the target intelligent network provided in this application may correspond to a new processing object represented by the foregoing process.

It should be further understood that a construction form of the target intelligent network may be a neural network or another intelligent learning architecture. This is not limited. For example, the target intelligent network may be implemented by using one or more (such as a combination in a combination manner) of neural networks such as a perceptron, a convolutional neural network, and a recurrent neural network that are constructed by using architectures such as a feedforward neural network and a recursive network. For another example, the target intelligent network may alternatively be implemented by using a non-neural network, for example, a network such as a decision tree or a deep forest.

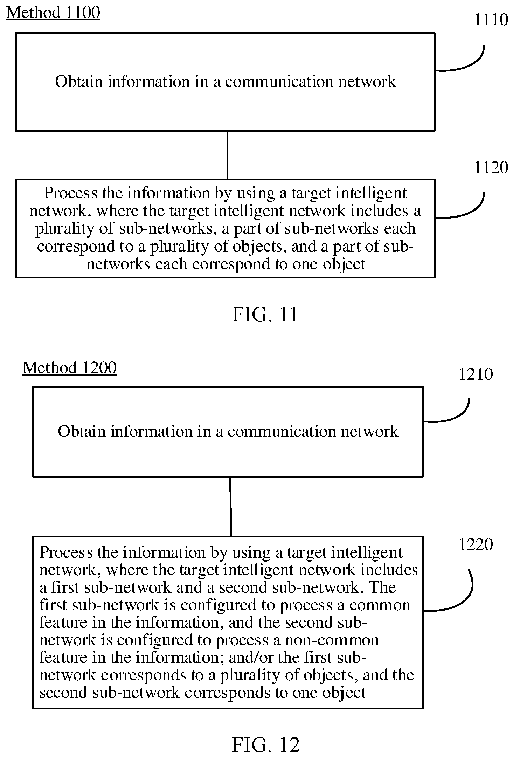

The foregoing method 900 is mainly described from a perspective of a feature. In addition, the method may also be described from a perspective of an object for which a sub-network is used. The following provides example descriptions with reference to a method 1100 shown in FIG. 11.

1110: Obtain information in a communication network.

1120: Process the information by using a target intelligent network, where the target intelligent network includes a plurality of sub-networks, a part of sub-networks each correspond to a plurality of objects, and a part of sub-networks each correspond to one object.

In embodiments of this application, "corresponding" may be understood as association, in other words, binding. For example, for a sub-network used for an object, it may be considered that the object corresponds to the sub-network.

In embodiments of this application, the "part of sub-networks" may include one or more sub-networks.

For example, the "object" may represent a communication device (such as a terminal device or a network device), or may represent a communication scenario, or may represent another object. This is not limited. For example, the object may alternatively be the processing object described when the target intelligent network is described above. When the object is a processing object, it represents that, for different processing objects, target intelligent networks corresponding to the processing objects are respectively designed. Apart of sub-networks in the plurality of target intelligent networks corresponding to the plurality of processing objects may be the same. It may be understood that the part of sub-networks may participate in processing a part of features of the processing obj ects. A first processing object and a second processing object are used as an example. In a target intelligent network designed for the first processing object and a target intelligent network designed for the second processing object, a part of sub-networks may be shared. The part of sub-networks may not only participate in processing a part of features of the first processing object, but also participate in processing a part of features of the second processing object.

That a sub-network corresponds to an object represents that the sub-network may be used for the object, in other words, the sub-network may participate in processing information about the object, in other words, the sub-network is configured to process some features of the obj ect.

An example in which an object represents a communication device is used. That a sub-network corresponds to a plurality of communication devices may represent that all the plurality of communication devices may use the sub-network, in other words, the sub-network may be shared by the plurality of communication devices, in other words, the sub-network may participate in processing information about the plurality of communication devices, in other words, some features of the plurality of communication devices may be processed by using the sub-network. That a sub-network corresponds to one communication device represents that the sub-network is used only for one communication device, in other words, the sub-network is associated with one communication device, in other words, the sub-network exclusively belongs to one communication device, in other words, only some features of the communication device are processed by using the sub-network.

FIG. 10 is used as an example. It is assumed that L1 and L2 each correspond to a plurality of objects, and Lk and Li each correspond to one object.

A communication device is used as an example. L1 and L2 each may be shared by a plurality of communication devices, Lk corresponds to one communication device, and Li corresponds to another communication device. A communication device 1 and a communication device 2 are used as an example. A target intelligent network shown in FIG. 10(1) is a target intelligent network corresponding to the communication device 1, and a target intelligent network shown in FIG. 10(2) is a target intelligent network corresponding to the communication device 2. A part of sub-networks in the two target intelligent networks are the same, for example, sub-networks L1 and L2. In other words, the communication device 1 and the communication device 2 may share the sub-networks L1 and L2. For different communication devices, there may be particular sub-networks. For example, a particular sub-network Li is separately trained for the communication device 1; and a particular sub-network Lk is separately trained for the communication device 2.

A processing object is used as an example. L1 and L2 may be shared by a plurality of processing objects, Lk corresponds to one processing object, and Li corresponds to another processing object. Encoding/decoding processing and modulation/demodulation processing are used as an example. The target intelligent network shown in FIG. 10(1) is a target intelligent network corresponding to the encoding/decoding processing, and the target intelligent network shown in FIG. 10(2) is a target intelligent network corresponding to the modulation/demodulation processing. Apart of sub-networks in the two target intelligent networks are the same, for example, the sub-networks L1 and L2, in other words, the sub-networks L1 and L2 may be shared in the decoding processing and the modulation/demodulation processing. For different processing objects, there may be particular sub-networks. For example, the particular sub-network Li is separately trained for the encoding/decoding processing; and the particular sub-network Lk is separately trained for the modulation/demodulation processing.

In embodiments of this application, a hierarchical network architecture is proposed. In embodiments of this application, in consideration of similar or approximate features of objects between object groups, and an inherent classification processing feature of an intelligent network (such as a neural network), a network architecture with a hierarchical mechanism is designed, so that network overheads can be greatly reduced while performance is ensured. For example, for a target intelligent network of an object, the target intelligent network of the object includes a plurality of sub-networks. A part of the plurality of sub-networks may be used not only for the object, but also for one or more other objects, and another part of the plurality of sub-networks are used only for the object. Therefore, for each object, a complete target intelligent network does not need to be separately designed, and training costs and overheads can be reduced. In addition, for each object, there is a particular sub-network. In this case, the particular sub-network may be separately trained based on a feature of each object, so that network performance and a real-time requirement can also be ensured as much as possible.

The following provides detailed descriptions of how to classify sub-networks and obj ects.

It should be understood that the method 1100 and the method 900 may be used independently, or may be used in combination. For example, when the two methods are used in combination, that a part of sub-networks correspond to different objects may represent that a common feature of the different objects may be processed by using the part of sub-networks; and that a part of sub-networks correspond to one object may represent that a non-common feature of the object may be processed by using the part of sub-networks.

For ease of understanding, the following provides example descriptions by using an example in which there are mainly two types of sub-networks, which are respectively denoted as a first sub-network and a second sub-network.

It should be understood that the first sub-network and the second sub-network are described merely as an example for differentiation, and names of the sub-networks do not constitute a limitation to the protection scope of embodiments of this application. For example, the first sub-network may also be referred to as a common sub-network, and the second sub-network may also be referred to as a private sub-network or a particular sub-network. It may be understood that any names that can represent meanings that are the same as or similar to meanings of the first sub-network and the second sub-network are applicable to embodiments of this application. The following provides example descriptions by using the first sub-network and the second sub-network as an example.

FIG. 12 is a schematic diagram of an information processing method 1200 according to an embodiment of this application. The method 1200 may include the following steps.

1210: Obtain information in a communication network.

1220: Process the information by using a target intelligent network, where the target intelligent network includes a first sub-network and a second sub-network. The first sub-network is configured to process a common feature in the information, and the second sub-network is configured to process a non-common feature in the information; and/or the first sub-network corresponds to a plurality of objects, and the second sub-network corresponds to one object.

In this application, the first sub-network represents a sub-network that is in the target intelligent network and that is configured to process the common feature in the information, and/or the first sub-network represents a sub-network corresponding to one object. It should be understood that the first sub-network does not limit a quantity of sub-networks to be one. For example, the first sub-network may include one or more sub-networks. As shown in FIG. 10, L1 and L2 each may be considered as a first sub-network.

Similarly, the second sub-network represents a sub-network that is in the target intelligent network and that is configured to process the non-common feature in the information, and/or the second sub-network represents a sub-network corresponding to a plurality of objects. It should be understood that the second sub-network does not limit a quantity of sub-networks to be one. For example, the second sub-network may include one or more sub-networks. In the target intelligent network shown in FIG. 10(1), Li may be considered as a second sub-network. In the target intelligent network shown in FIG. 10(2), Lk may be considered as a second sub-network.

For related descriptions of the common feature, the non-common feature, the sub-network, and the object, refer to the descriptions in the method 900 and the method 1100. Details are not described herein again.

In embodiments of this application, a hierarchical network architecture is proposed. For example, the target intelligent network may include a first sub-network and a second sub-network, the first sub-network corresponds to a common feature, and the second sub-network corresponds to a non-common feature; and/or the first sub-network corresponds to a plurality of objects, and the second sub-network corresponds to one object. The first sub-network corresponds to the common feature, for example, a feature corresponding to a common environment. Different objects may reuse the first sub-network, in other words, a change frequency thereof does not need to be excessively high. Therefore, complexity and costs can be reduced. The second sub-network corresponds to the non-common feature. Different objects may train and update the second sub-network, in other words, the second sub-network can be trained and updated in a shorter periodicity. Therefore, performance can be ensured as much as possible. In this manner, a tradeoff between performance and complexity can be effectively achieved, and there is more room for performance improvement and complexity reduction.

The following describes embodiments of this application in detail from several aspects. For ease of understanding, the following provides example descriptions by using an example in which objects are a communication device and a communication scenario.

### Aspect 1: Cases in which a sub-network may be used

A first sub-network and a second sub-network are used as an example. For example, the first sub-network and the second sub-network may belong to any one of the following cases.

Case 1: The first sub-network corresponds to a plurality of communication devices, and the second sub-network corresponds to one communication device.

In this case, for example, for a communication device, a target intelligent network corresponding to the communication device includes a first sub-network and a second sub-network. The communication device may reuse a first sub-network corresponding to another communication device, and update and train the second sub-network corresponding to the communication device.

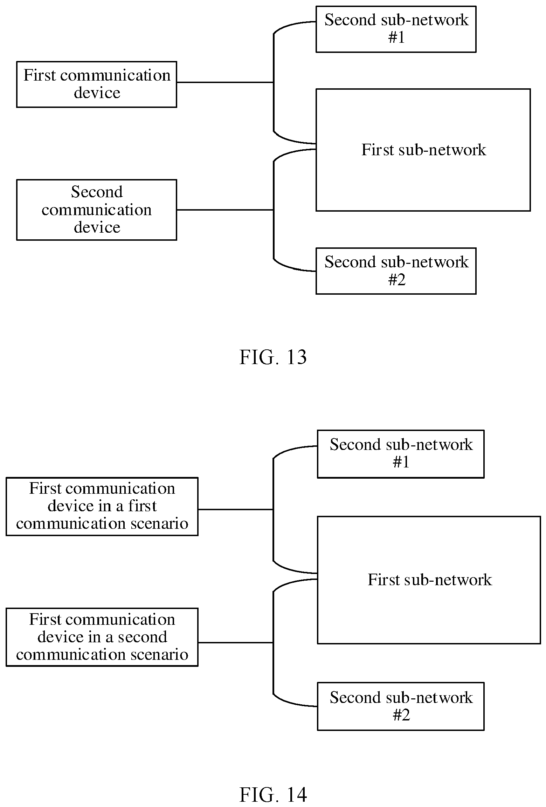

FIG. 13 shows a specific example. It is assumed that a first sub-network corresponds to a first communication device and a second communication device. As shown in FIG. 13, a target intelligent network corresponding to the first communication device includes the first sub-network and a second sub-network #1, and a target intelligent network corresponding to the second communication device includes the first sub-network and a second sub-network #2. It can be learned that the first communication device and the second communication device may share the first sub-network.

Optionally, the first sub-network may be configured to process a common feature for the first communication device and the second communication device. For example, if the first communication device and the second communication device are terminal devices in the UE group 1 shown in FIG. 4, the first sub-network may be configured to process an angle and a delay in CSI information corresponding to the first communication device, and the first sub-network may be further configured to process an angle and a delay in CSI information corresponding to the second communication device.

Based on the case 1, a plurality of communication devices may share one first sub-network, to reduce complexity. In addition, each communication device may have a respective corresponding second sub-network, so that the second sub-network can be trained and updated based on an actual situation, to ensure performance as much as possible.

Case 2: The first sub-network corresponds to one communication device in different communication scenarios, and the second sub-network corresponds to one communication device in one communication scenario.

In this case, for example, for a communication device in a communication scenario, a target intelligent network corresponding to the communication device includes a first sub-network and a second sub-network. The communication device may reuse a first sub-network of the communication device in another communication scenario, and update and train the second sub-network in the communication scenario.

FIG. 14 shows a specific example. It is assumed that a first sub-network corresponds to a first communication device in a first communication scenario and a second communication scenario. As shown in FIG. 14, a target intelligent network corresponding to the first communication device in the first communication scenario includes the first sub-network and a second sub-network #1, and a target intelligent network corresponding to the first communication device in the second communication scenario includes the first sub-network and a second sub-network #2. It can be learned that the first communication device in the first communication scenario and the first communication device in the second communication scenario may share the first sub-network.

Optionally, the first sub-network may be configured to process a common feature described for the first communication device in the first communication scenario and the communication device in the second communication scenario. For example, if the first communication scenario and the second communication scenario are communication scenarios in a same conference room, in this case, an environment feature (namely, the conference room) may be considered as a common feature. In this case, the first sub-network may be configured to extract the environment feature of the first communication device in the first communication scenario, and the first sub-network may be further configured to extract the environment feature of the first communication device in the second communication scenario.

Based on the case 2, a communication device may share one first sub-network in different communication scenarios, to reduce complexity. In addition, the communication device may have a respective corresponding second sub-network in each communication scenario, so that the second sub-network can be trained and updated based on an actual situation, to ensure performance as much as possible.

Case 3: The first sub-network corresponds to a plurality of communication scenarios, and the second sub-network corresponds to one communication scenario.

In this case, for example, for a communication scenario, a target intelligent network corresponding to the communication scenario includes a first sub-network and a second sub-network. In the communication scenario, a first sub-network corresponding to another communication scenario may be reused, and the second sub-network in the communication scenario may be updated and trained.

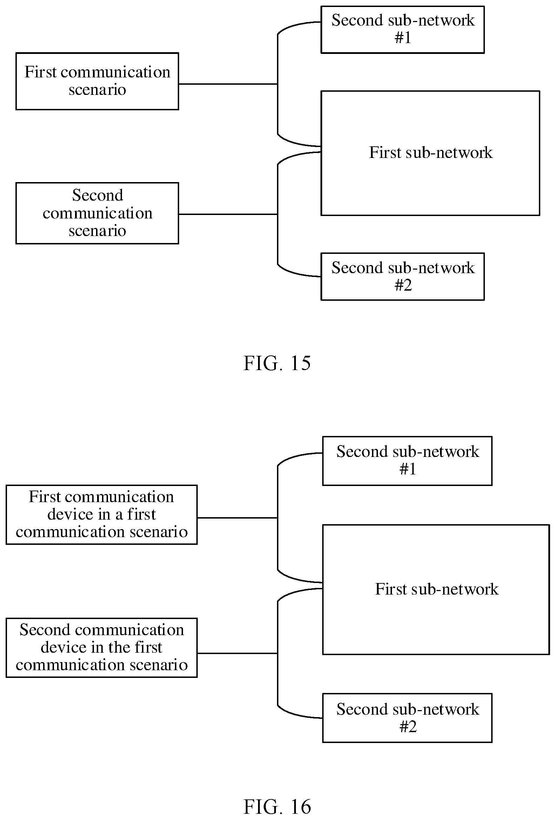

FIG. 15 shows a specific example. It is assumed that a first sub-network corresponds to a first communication scenario and a second communication scenario. As shown in FIG. 15, a target intelligent network corresponding to the first communication scenario includes the first sub-network and a second sub-network #1, and a target intelligent network corresponding to the second communication scenario includes the first sub-network and a second sub-network #2. It can be learned that the first sub-network may be shared in the first communication scenario and the second communication scenario.

Optionally, the first sub-network may be configured to process a common feature for the first communication scenario and the second communication scenario. For example, if the first communication scenario and the second communication scenario are communication scenarios in a same school, in this case, a geographic feature (namely, the school) may be considered as a common feature. In this case, the first sub-network may be configured to extract the geographic feature of any communication device in the first communication scenario, and the first sub-network may be further configured to extract the geographic feature of any communication device in the second communication scenario.

Based on the case 3, one first sub-network may be shared in a plurality of communication scenarios, to reduce complexity. In addition, each communication scenario may have a respective corresponding second sub-network, so that the second sub-network can be trained and updated based on an actual situation, to ensure performance as much as possible.

Case 4: The first sub-network corresponds to a plurality of communication devices in one communication scenario, and the second sub-network corresponds to one communication device in one communication scenario.

In this case, for example, for a communication device in a communication scenario, a target intelligent network corresponding to the communication device includes a first sub-network and a second sub-network. The communication device may reuse a first sub-network of another communication device in the communication scenario, and update and train the second sub-network of the communication device in the communication scenario.

FIG. 16 shows a specific example. It is assumed that a first sub-network corresponds to a first communication device in a first communication scenario and a second communication device in the first communication scenario. As shown in FIG. 14, a target intelligent network corresponding to the first communication device in the first communication scenario includes the first sub-network and a second sub-network #1, and a target intelligent network corresponding to the second communication device in the first communication scenario includes the first sub-network and a second sub-network #2. It can be learned that the first communication device and the second communication device may share the first sub-network in the first communication scenario.

Optionally, the first sub-network may be configured to process a common feature for the first communication device in the first communication scenario and the second communication device in the first communication scenario. For example, if the first communication device in the first communication scenario and the second communication device in the first communication scenario are terminal devices in the UE group 1 shown in FIG. 4, in this case, an angle and a delay may be considered as common features. In this case, the first sub-network may be configured to process angle and delay information of the first communication device in the first communication scenario, and the first sub-network may be further configured to process angle and delay information of the second communication device in the first communication scenario.

Based on the case 4, different communication devices in a same communication scenario may share one first sub-network, to reduce complexity. In addition, different communication devices in a same communication scenario may have respective corresponding second sub-networks, so that the second sub-networks can be trained and updated based on an actual situation, to ensure performance as much as possible.

It should be understood that, with reference to the four cases, the foregoing provides example descriptions mainly from a perspective of an object for which a sub-network is used. This is not limited. Any variant solution belonging to the four cases falls within the protection scope of embodiments of this application. For example, a first sub-network may correspond to information about an object group. The group may be a communication device group (such as a terminal device group), the group may be a communication scenario group, the group may be a feature group, or the like. For another example, a first object may correspond to a plurality of processing objects. In other words, the communication device or the communication scenario in the foregoing case 1 to case 4 may be replaced with a processing object.

### Aspect 2: Sub-network attribute

Optionally, a first sub-network corresponds to one or more indexes (indexes, IDs).

According to this design, a communication device can learn of information about the first sub-network by learning of the ID corresponding to the first sub-network. For example, a correspondence between a first sub-network and an ID is predefined or preconfigured. In actual application, the communication device may directly read, based on an ID, a first sub-network corresponding to the ID. The first sub-network may be pre-trained. For example, the network is pre-trained in a protophase, and broadcast.

In a possible design, the ID corresponding to the first sub-network may be an ID of an object corresponding to the first sub-network. For example, the first sub-network corresponds to three IDs, and the three IDs are respectively an ID identifying a communication device 1, an ID identifying a communication device 2, and an ID identifying a communication device 3.

In another possible design, the ID corresponding to the first sub-network may be a group ID. For example, the ID corresponding to the first sub-network is an ID of an object group, or any information form that can reflect a group. A communication device group is used as an example. The ID corresponding to the first sub-network may be an ID of the communication device group. For example, the ID corresponding to the first sub-network may be an ID of the communication device group. For another example, the ID corresponding to the first sub-network may be an ID of an area in which the communication device group is located.

In another possible design, the ID corresponding to the first sub-network may alternatively be an ID defined for the first sub-network. For example, there are a plurality of first sub-networks, and an ID may be defined or configured for each first sub-network.

It should be understood that the foregoing is merely example descriptions, and does not impose a limitation. Any design in which an ID can identify the first sub-network is applicable to embodiments of this application.

Optionally, the first sub-network has a group attribute.

As described above, the first sub-network corresponds to a plurality of objects, and the plurality of objects may be considered as one object group or a plurality of object groups. One first sub-network may correspond to one or more object groups. The object group may be a communication device group, or may be a communication scenario group, or may be a processing object group. In an example, the first sub-network may correspond to one or more communication device groups, in other words, communication devices in the one or more communication device groups may share the corresponding first sub-network thereof. In another example, the first sub-network may correspond to one or more communication scenario groups, in other words, the corresponding first sub-network thereof may be shared in communication scenarios in the one or more communication scenario groups. In another example, the first sub-network may correspond to one or more processing object groups, in other words, when processing objects in the one or more processing object groups are processed, the corresponding first sub-network thereof may be shared.

It should be understood that a specific form of the object group is not limited. For example, the object group may alternatively be a feature group.

Optionally, an update periodicity of the first sub-network may be different from an update periodicity of a second sub-network. For example, the first sub-network is configured to process a common feature in information, or the first sub-network corresponds to a plurality of objects, and a change frequency thereof does not need to be excessively high. The second sub-network corresponds to a non-common feature, or the second sub-network corresponds to one object, and can be trained and updated in a shorter periodicity, to adapt to a device change or a scenario change.

Optionally, information related to the first sub-network and/or the second sub-network may be carried in one or more of the following signaling: RRC, MAC-CE, DCI, or UCI. Content of the signaling may be sent by using a channel such as a PDCCH, a PUCCH, a PDSCH, a PUSCH, or a physical broadcast channel (physical broadcast channel, PBCH). In addition, exchange of the information related to the first sub-network and/or the second sub-network may be aperiodic, semi-permanent, or periodic.

The information related to the first sub-network and/or the second sub-network may include related information for performing classification of the first sub-network and the second sub-network, may include related information for training the first sub-network and the second sub-network, may include related information for using the first sub-network and the second sub-network, or the like.

For example, the information related to the first sub-network and/or the second sub-network may include but is not limited to: reference information for performing classification of the first sub-network and the second sub-network, dataset information for training the first sub-network, dataset information for training the second sub-network, parameter information of the first sub-network, model structure information of the first sub-network, parameter information of the second sub-network, model structure information of the second sub-network, information about a plurality of objects or object groups corresponding to the first sub-network, information about an object corresponding to the second sub-network, information about a correspondence between the first sub-network and the plurality of corresponding objects or object groups, and the like.

For example, parameter information of a sub-network (such as the parameter information of the first sub-network or the parameter information of the second sub-network) may include but is not limited to weight and/or offset information.

For example, model structure information of a sub-network (such as a model structure of the first sub-network or a model structure of the second sub-network) may include but is not limited to a network type, a scale, and/or a connection relationship between network nodes that are/is used in an intelligent network.

The reference information for performing classification of the first sub-network and the second sub-network is described below with reference to an aspect 4.

### Aspect 3: Grouping manner of an object group

In a possible implementation, grouping may be performed based on a specific common feature or a specific type of common feature. For example, the common feature may include but is not limited to one or more of the following: geographical location information, statistical delay spread information, Doppler distribution information, or angle distribution information.

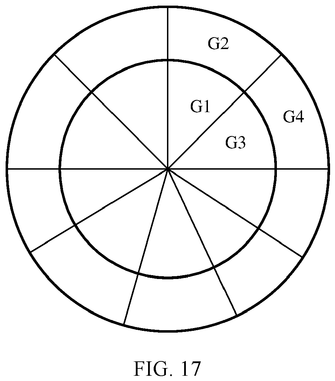

In an example, grouping may be performed based on a geographical location. An example in which the object group is a communication device group is used. FIG. 17 is a schematic diagram of geographical location-based grouping. As shown in FIG. 17, grouping may be performed based on a geographical location of a communication device (or based on an area to which the communication device belongs). For example, groups (groups) obtained through grouping may be denoted as a group 1 (G1), a group 2 (G2), a group 3 (G3), and a group 4 (G4). The first sub-network corresponds to one or more communication device groups, communication devices in the one or more communication device groups may share the first sub-network, and different communication device groups may correspond to different first sub-networks. The group 1 is used as an example. The group 1 corresponds to a first sub-network. In this case, all communication devices in the group 1 may share the first sub-network corresponding to the group 1.

In another example, grouping may be performed based on a Doppler distribution. An example in which the object group is a communication device group is used. As shown in FIG. 4, the UE group 1 may be considered as an object group. The UE group 1 may correspond to one first sub-network, and each UE in the UE group 1 may correspond to one second sub-network. The UE group 2 may be considered as an object group. The UE group 2 may correspond to another first sub-network, and each LTE in the UE group 2 may correspond to one second sub-network.

It should be understood that the grouping manner of the object group is not limited in embodiments of this application. In addition, for different objects, grouping manners may be different. By way of example, and not limitation, for a communication device, grouping may be performed based on a geographical location; and for a communication scenario, grouping may be performed based on a feature.

Optionally, a grouping status may be notified by a network device to a terminal device, or may be determined by the terminal device. In an example, the first sub-network corresponds to one or more group IDs, and in this case, the network device may indicate the group ID to the terminal device. In this example, the network device may indicate the group ID, to assist in designing the target intelligent network with a hierarchical mechanism. In another example, the network device is responsible for classifying group information (such as area information), and the terminal device determines a group to which the terminal device belongs (for example, determines the group to which the terminal device belongs based on location information and a grouping reference location of the terminal device), and reports a group ID (such as an area ID). In this example, the terminal device may feed back the group ID, to assist in designing the target intelligent network with the hierarchical mechanism.

According to embodiments of this application, it is considered that a difference between different object groups is evident, and a difference between objects in an object group is small. Therefore, designing the first sub-network for the object group not only can reduce impact on performance as much as possible, but also can reduce complexity.

### Aspect 4: Classification of a first sub-network and a second sub-network

The classification of the first sub-network and the second sub-network may be performed by referring to one or more of the following information: environment data information, geographical location information, delay spread information, Doppler distribution information, sensing signal information, communication device identification information, service type information, terminal device feedback suggestion information, or the like.

In a possible implementation, a network device performs classification of the first sub-network and the second sub-network based on one or more of the following information: the environment data information, the geographical location information, the delay spread information, the Doppler distribution information, the sensing signal information, the communication device identification information, the service type information, the terminal device feedback suggestion information, or the like.

In this implementation, the network device may notify the terminal device of definition or classification information of the first sub-network and the second sub-network. Exchange of the definition or the classification information of the first sub-network and the second sub-network may be aperiodic, semi-permanent, or periodic.

The definition or the classification information of the first sub-network and the second sub-network may be carried in one or more of the following signaling: RRC, MAC-CE, DCI, or UCI. Content of the signaling may be sent by using a channel such as a PDCCH, a PUCCH, a PDSCH, a PUSCH, or a PBCH.

In another possible implementation, the terminal device feeds back a suggestion of definition/classification information of the first sub-network and the second sub-network based on one or more of the following information: the environment data information, the geographical location information, the delay spread information, the Doppler distribution information, the sensing signal information, terminal device identification information, the service type information, or the like.

The feedback suggestion of the terminal device may also be aperiodic, semi-permanent, or periodic.

### Aspect 5: Generation of a first sub-network and a second sub-network

1. The generation of the first sub-network may be implemented by using at least any one of the following solutions.

Solution 1: The first sub-network is obtained through training by a communication device.

In a possible implementation, the first sub-network is obtained through training by one communication device.

For example, the communication device trains a part or all of network content in the first sub-network, to obtain a training result, namely, the first sub-network.

In another possible implementation, the first sub-network is obtained through training by a plurality of communication devices.

For example, the plurality of communication devices separately train a part or all of network content in the first sub-network, and perform sharing and combination to obtain a joint training result, namely, the first sub-network. When the communication devices are terminal devices, manners of the network sharing and combination may include but are not limited to a D2D manner. The sharing manner of the terminal devices is described below in detail with reference to information about sharing the first sub-network between the terminal devices.

In the solution 1, the communication device participating in the training may be a default communication device, or may be an agreed-upon communication device (such as a communication device agreed upon based on preset information). Alternatively, when the communication devices are terminal devices, the communication devices may be terminal devices indicated by a network device. This is not limited. For example, the preset information may include: selecting a quantity of communication devices based on values of communication device identifiers in sequence (for example, in descending order or ascending order of the identifiers).

The communication device participating in the training may be a communication device with a strong capability in a communication device group, or may be a communication device that has participated in the training in the communication device group, or may be any communication device in the communication device group. This is not limited. The communication device participating in the training may be a part of communication devices in the communication device group, or may be all communication devices in the communication device group.

An example in which the communication device is a terminal device is used. Optionally, the network device may indicate, in any one of the following manners, a terminal device that participates in generating the first sub-network.

In a manner, the network device may indicate, in a form of an x-bit (bit) switch, the terminal device that participates in generating the first sub-network, where x is an integer greater than 1 or equal to 1.

For example, a 1-bit field may be used to indicate whether the generation of the first sub-network is participated in. 0 corresponds to participating in generating the first sub-network, and 1 corresponds to not participating in generating the first sub-network. Alternatively, 1 corresponds to not participating in generating the first sub-network, and 0 corresponds to participating in generating the first sub-network. It should be understood that, how to specifically perform indication or how many bits are used for indication is not limited in embodiments of this application.

In another manner, the network device may send a terminal device list, to indicate the terminal device that participates in generating the first sub-network.

For example, the network device may send a list of terminal devices that participate in generating the first sub-network, for example, a UE i and a LTE j, where the LTE i and the UE j both participate in generating the first sub-network.

For another example, the network device may send a list of terminal devices that do not participate in generating the first sub-network, for example, a UE i' and a UE j', where a terminal device other than the LTE i' and the LTE j' participate in generating the first sub-network.

Solution 2: The first sub-network is delivered by a network device.

In a possible implementation, the network device may train the first sub-network in advance and send the first sub-network to a terminal device.

It should be understood that the two solutions are merely an example for description, and this is not limited. For example, the first sub-network may alternatively be predefined in another manner.

2. All communication devices may train and update the second sub-network by themselves.

The foregoing describes the generation of the first sub-network and the second sub-network. A specific process of generating the first sub-network and the second sub-network, in other words, a training process, is not strictly limited.

Optionally, the foregoing training process (the training process of the first sub-network and the second sub-network) may be offline training or online training. This is not limited. For example, when a quantity of update layers is small, the online training may be performed, and convergence is fast.

In the offline training, a reasoning process of an intelligent network can be implemented in a real-time communication process, and a learning or training process of a sub-network (such as the first sub-network and the second sub-network) is completed before real-time communication. In the online training, the sub-network is updated at the same time in a real-time communication process between a transmitting end and a receiving end. For example, the online training includes learning and reasoning processes.

Optionally, training set allocation information and constraint condition information (such as a quantity of iterations) may be determined through configuration (such as indication by the network device) or pre-agreement (such as agreement based on a standard table). In addition, a data set may alternatively be selected in an operation manner (for example, by proportion) based on sub-network scale information or information about a proportion of a sub-network to an entire network.

The foregoing quantity of iterations may be used as a possible implementation of a constraint condition for restricting an iteration process. Certainly, the constraint condition may be set in another manner. For example, a convergence condition (namely, a network training termination condition) may be configured or pre-agreed upon as the constraint condition.

A communication device may generate a target intelligent network based on the first sub-network and the second sub-network. It should be understood that, that the communication device generates the target intelligent network based on the first sub-network and the second sub-network is merely a deterministic description. In other words, the first sub-network and the second sub-network jointly process information about the communication device, and that the communication device generates the target intelligent network may not be a necessary action.

For example, a network formed by connecting the first sub-network and the second sub-network is the target intelligent network.

In addition, the connection of the first sub-network and the second sub-network is not limited. For example, reference may be made to a manner of connection between neural units in a neural network. To be specific, an output of the first sub-network may be an input of the second sub-network, or an output of the second sub-network may be an input of the first sub-network.

### Aspect 6: Manner in which a communication device learns of a sub-network

The communication device may train and update a second sub-network, and therefore may learn of the second sub-network.

In embodiments of this application, the communication device may learn of information about a first sub-network in the following plurality of manners. For example, the information about the first sub-network may include but is not limited to: dataset information for training the first sub-network, parameter information of the first sub-network, model structure information of the first sub-network, information about a plurality of objects or object groups corresponding to the first sub-network, information about a correspondence between the first sub-network and the plurality of corresponding objects or object groups, and the like.

For example, the parameter information of the first sub-network may include but is not limited to weight and/or offset information.

For example, the model structure information of the first sub-network may include but is not limited to a network type, a scale, and a connection relationship between network nodes that are used in an intelligent network.

An example in which the communication device is a terminal device. The terminal device may obtain the information about the first sub-network in any one of the following manners.

In a possible implementation, a network device indicates the information about the first sub-network to the terminal device.

For example, the network device sends the information about the first sub-network to the terminal device. For example, the network device may directly indicate the parameter information and the model structure information of the first sub-network to the terminal device.

For another example, the first sub-network is bound to an ID (such as a group ID), the network device may indicate the ID corresponding to the first sub-network to the terminal device, and the terminal device may learn of the information about the first sub-network based on the ID.

For another example, the terminal device may determine a group to which the terminal device belongs, and report a group ID, to apply for information about a first sub-network corresponding to the group ID. The network device sends, to the terminal device based on the group ID reported by the terminal device, the information about the first sub-network corresponding to the group ID.

In another possible implementation, the terminal device may learn of the information about the first sub-network.

For example, the terminal device participates in training the first sub-network, and stores the information about the first sub-network.

For another example, a correspondence between a terminal device group and a first sub-network may be pre-stored. The terminal device inherits, based on a terminal device group to which the terminal device belongs, a first sub-network corresponding to the terminal device group, or directly reads information about a first sub-network corresponding to the terminal device group.

In another possible implementation, the information about the first sub-network is shared between terminal devices.

For example, the information about the first sub-network is shared between terminal devices in a terminal device group. In other words, terminal devices corresponding to a same sub-network may share the first sub-network.

For example, the information about the first sub-network may be shared between terminal devices in a terminal device group in a D2D manner.

Related information (such as the information about the first sub-network or network content trained by the terminal device) of a sub-network may be shared between terminal devices in a D2D (such as a sidelink (sidelink)) manner. This process may include at least three steps: synchronization (including sending of primary and secondary D2D synchronization signals), device discovery, and communication. In this process, sending of related information may be implemented by using a PCS interface or another interface. This is not limited.

The following uses an example in which terminal devices in a terminal device group share information in a D2D manner, to describe steps that may be included in D2D communication.
(1) Synchronization: To perform D2D communication, a plurality of terminal devices in the terminal device group generally need to first perform synchronization. For example, the plurality of terminal devices first receive a synchronization signal before performing D2D communication. A synchronization source may be a network device, or may be a terminal device. When the synchronization source is a terminal device, the terminal device may be a terminal device (for example, denoted as a sending terminal device) that participates in training a first sub-network, or may be a terminal device (for example, denoted as a receiving terminal device) that does not participate in training the first sub-network.
(2) Device discovery process: The device discovery process may be triggered by the sending terminal device in the terminal device group, or may be triggered by the receiving terminal device. For example, the sending terminal device notifies a sub-network to update related information, and another terminal device in the terminal device group may monitor and receive the information. For another example, the receiving terminal device sends request information to the terminal device, to request a sub-network to update related information, and the sending terminal device responds to the related information of the sub-network based on the request information.
(3) Communication phase: In a direct communication phase, the sending terminal device and the receiving terminal device implement D2D direct communication by using a D2D communication resource. For example, after the sending terminal device and the receiving terminal device are configured with a group ID (for example, the group ID is obtained by the sending terminal device and the receiving terminal device or the sending terminal device and the receiving terminal device are notified of the group ID), the sending terminal device and the receiving terminal device access or detect a group communication air interface resource, to implement the D2D direct communication. The group ID represents a group ID that corresponds to the first sub-network and that is used for the terminal device group. The group ID may be an ID of the terminal device group, or may be any information form that can reflect the terminal device group.

A manner of scheduling the D2D communication resource is not limited. For example, the D2D communication resource may be indicated by the network device, or may be selected by a terminal device from a resource pool. For example, the network device schedules a specified resource for the terminal device, for the terminal device to send direct data (direct data) and direct communication control information (direct control information). For another example, a resource pool is allocated, configured, or designated in advance. When the resource pool needs to be used, the terminal device selects a resource from the resource pool to send the direct data and the direct communication control information.

A specific interaction manner in which the related information of the sub-network is shared between the terminal devices in the D2D manner is not strictly limited. For example, for a given terminal device group, a plurality of optional interaction manners in which related information of a common sub-network is shared in the D2D manner may be generated based on one or more of the following: a device discovery procedure requester, a synchronization signal sender, a communication resource scheduling manner, a group division manner, and an index configuration manner. In other words, for the given terminal device group, the plurality of optional interaction manners in which related information of a common sub-network is shared in the D2D manner are generated based on different device discovery procedure requesters, different synchronization signal senders, different communication resource scheduling manners, different group division manners, different index configuration manners, or any combination thereof.

For example, the sending terminal device may start a device discovery procedure by using a PCx interface based on a training status of the first sub-network of the sending terminal device (for example, training is completed, or it is observed that the first network is greatly different from an earlier version), and after giving a response, the receiving terminal device establishes a connection based on a configured group index and a communication resource that is configured by the network device. In addition, the sending terminal device sends a part or all of the first sub-network to the receiving terminal device.

It should be understood that the foregoing is merely example descriptions. Any variation of any one of the foregoing steps or any manner in which a function to be implemented by each of the foregoing steps is applicable to embodiments of this application.

It should be further understood that any manner in which information may be shared between terminal devices (such as a manner in which point-to-point communication may be implemented) falls within the protection scope of embodiments of this application.

The foregoing describes content of embodiments of this application in detail with reference to the aspect 1 to the aspect 6. It should be understood that content of the foregoing aspects may be used independently, or may be used in combination. This is not strictly limited. An example in which the solution in aspect 5 and the solution in aspect 6 are used in combination is used. After performing training to obtain the first sub-network, one or more communication devices in a communication device group may share the first sub-network with another communication device in the communication device group.

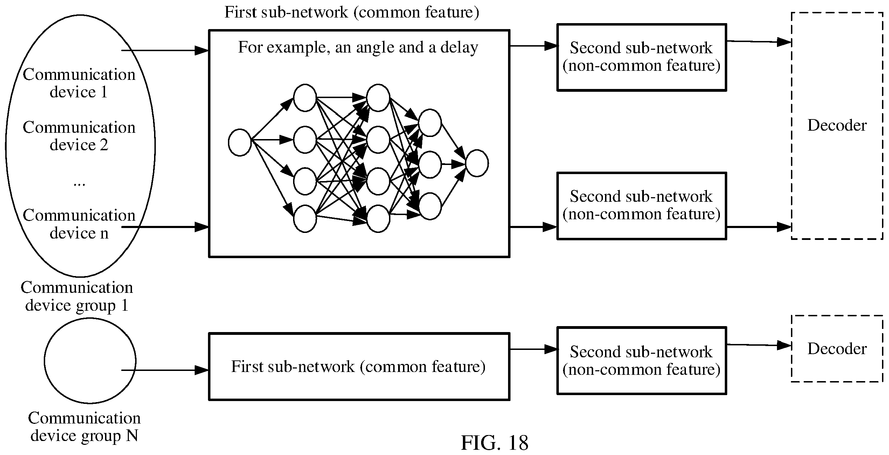

The foregoing mainly describes the solutions in embodiments of this application from different aspects. For ease of understanding, the following provides a specific example with reference to FIG. 18.

As shown in FIG. 18, a communication device group 1 and a communication device group N each correspond to one first sub-network. The communication device group 1 is used as an example. The communication device group 1 includes a communication device 1, a communication device 2, ..., and a communication device n.

The communication device group 1 is used as an example. A first sub-network corresponding to the communication device group 1 may have an attribute described in the aspect 2. For example, the communication device group 1 may correspond to one ID, for example, a group ID of the communication device group 1. The communication devices in the communication device group 1 may be grouped according to the solution in the aspect 3. For example, based on geographical locations of the communication devices, the communication device 1, the communication device 2, ..., and the communication device n are grouped into one communication device group, namely, the communication device group 1. Target intelligent networks corresponding to the communication devices in the communication device group 1 each include a first sub-network and a second sub-network, and classification of the first sub-network and the second sub-network may be performed based on the solution in the aspect 4. Target intelligent networks corresponding to the communication devices in the communication device group 1 each include a first sub-network and a second sub-network, and the first sub-network and the second sub-network may be generated based on the solution in the aspect 5. For example, the communication device 1 performs training to generate the first sub-network, and the communication device 1 may share the first sub-network with the other communication devices (such as the communication device 2, ..., and the communication device n) in the communication device group 1. The communication device in the communication device group 1 may learn of information about the first sub-network according to the solution in the aspect 6. For example, the communication device n directly reads the information about the first sub-network based on an ID corresponding to the first sub-network. Content of each aspect is not described herein again.

As shown in FIG. 18, information about the communication device 1 is inputted into the target intelligent network, and the first sub-network and the corresponding second sub-network in the target intelligent network jointly process the information, and finally output a result. For example, after the target intelligent network completes the processing, the result is inputted into a decoder (decoder), for example, a decoder corresponding to an encoder (encoder). The first sub-network processes a common feature (common feature) in the information, in other words, the common feature in the information is processed by the first sub-network. The second sub-network corresponding to the communication device 1 processes a non-common feature (which, for example, may be denoted as a distinct feature) in the information, in other words, the non-common feature in the information is processed by the second sub-network corresponding to the communication device 1.

As shown in FIG. 18, information about the communication device n is inputted into the target intelligent network, and the first sub-network and the corresponding second sub-network in the target intelligent network jointly process the information, and finally output a result. For example, after the target intelligent network completes the processing, the result is inputted into the decoder, for example, the decoder corresponding to the encoder. The first sub-network processes a common feature in the information, in other words, the common feature in the information is processed by the first sub-network. The second sub-network corresponding to the communication device n processes a non-common feature in the information, in other words, the non-common feature in the information is processed by the second sub-network corresponding to the communication device n.

It can be learned from FIG. 18 that the communication device 1 and the communication device n correspond to the same first sub-network, and each correspond to one second sub-network. It is assumed that the communication device 1 and the communication device n are terminal devices in the LTE group 1 in the distribution shown in FIG. 4. In this case, for the communication device 1 and the communication device n, an angle and a delay may be considered as common features. As shown in FIG. 18, angle and delay information of the communication device 1 and angle and delay information of the communication device n may be processed by using a same first sub-network, and other information may be respectively processed by using respective corresponding second sub-networks.

It should be understood that how information about a communication device is inputted into a target intelligent network is not strictly limited. For example, the communication device sends information, and the target intelligent network processes the information, in other words, the target intelligent network captures, processes, or grabs a feature in the information.

It should be further understood that, how features are inputted into respective corresponding sub-networks is not strictly limited.

For example, one or more modules may be added between the communication device group and the target intelligent network, or added in the target intelligent network, and the module is configured to perform feature classification. For example, when the information about the communication device 1 is inputted into the target intelligent network, the information may be automatically classified by using the module. The angle and delay information is inputted into the first sub-network, and the other information is inputted into the second sub-network.

For another example, sub-networks are capable of extracting respective corresponding features. For example, when the information about the communication device 1 is inputted into the target intelligent network, the first sub-network extracts the angle and delay information for processing, and the second sub-network extracts the other information for processing.

It should be further understood that a processing sequence of the sub-networks is not strictly limited. For example, an output of the first sub-network may be an input of the second sub-network, as shown in FIG. 18. Alternatively, an output of the second sub-network may be an input of the first sub-network.

It should be further understood that a result output manner is not strictly limited. For example, the sub-networks may input respective results into the decoder. For another example, after results of the sub-networks are combined, a combined result is inputted into the decoder.

It should be further understood that a communication device group may correspond to one decoder, as shown in FIG. 18. Alternatively, a communication device group may correspond to a plurality of decoders. This is not limited.

It should be understood that FIG. 18 is merely an example for description, and does not limit the protection scope of embodiments of this application. For example, for a network architecture of the first sub-network shown in FIG. 18, reference is mainly made to a neural network architecture. The network architecture in the first sub-network may be another intelligent learning architecture.

The methods provided in embodiments of this application are described above in detail with reference to FIG. 1 to FIG. 18.

It should be understood that in some of the foregoing embodiments, an example in which a target intelligent network includes a first sub-network and a second sub-network is used for description. However, this does not constitute a limitation to this application. For example, the target intelligent network may include two or more sub-networks.

It should be further understood that in some of the foregoing embodiments, a sub-network is mainly used as an example for description. The foregoing sub-network may be replaced with a module, a component, a layer, a network, or the like.

It should be further understood that different types of features are mentioned in some of the foregoing embodiments. The type herein is not limited to a type to which a feature belongs. For example, features belonging to a time domain may all be common features, or may all be non-common features, or may partially be common features and partially be non-common features. This is not limited. Specifically, it needs to be determined with reference to another factor (such as a scenario in which a terminal is located).

It should be further understood that the common feature and the non-common feature are mentioned for a plurality of times in this application. It should be understood that the common feature and the non-common feature are relative concepts, in other words, are classification in a particular scenario; and do not limit a particular feature (in other words, a particular parameter).

It should be further understood that a quantity of sub-networks corresponding to the non-common feature is not limited. The modulation/demodulation processing is used as an example. A target intelligent network corresponding to the modulation/demodulation processing includes a second sub-network. In an example, the second sub-network may include a plurality of sub-networks, and the plurality of sub-networks are respectively configured to process a plurality of non-common features. In other words, for different non-common features, a sub-network corresponding to each non-common feature may be separately trained and updated. In another example, the second sub-network may include one sub-network, and the one sub-network processes a non-common feature. In other words, for different non-common features, one sub-network may be trained and updated for processing.

It should be further understood that all target intelligent networks in embodiments of this application may be replaced with, for example, target neural networks (such as DNNs).

It should be further understood that the intelligent network is mentioned for a plurality of times in this application, and a specific name of the intelligent network does not constitute a limitation to the protection scope of embodiments of this application. For example, a network used in a communication network may be denoted as an AI network, or may be denoted as an AI-MIMO network.

It should be further understood that the target intelligent network (namely, a hierarchical network architecture) provided in this application may be considered as an implementation architecture, and may be used in any complex network on which feature classification may be performed in a communication network, to improve overall network performance.

It should be further understood that in some of the foregoing embodiments, a communication device is used as an example for description. All communication devices may be replaced with terminal devices.

It should be further understood that, in some of the foregoing embodiments, a correspondence is mentioned, for example, a correspondence between a first sub-network and an object (such as a communication device or a communication scenario). Herein, that the first sub-network has the correspondence with the object represents that the first sub-network is associated with the object, in other words, the first sub-network may be used for the object. A specific form of the correspondence may be, for example, a table, or may be that the first sub-network includes related information of a corresponding object, or may be that the object includes related information of a corresponding first sub-network, or may be another form. This is not strictly limited.

Based on the foregoing technical solutions, an effective hierarchical network architecture is implemented by using a design idea of combining the first sub-network with the second sub-network (in other words, "common sub-network + private sub-network"). This not only can resolve a problem of performance deterioration caused by difficulty in grasping and extracting diversified sample features in a network oriented to multi-distribution training, but also can resolve a problem of insufficient generalization in a network oriented to single-distribution training. Based on the technical solutions of this application, a multi-dimensional optimization objective of greatly improving performance of a communication system and efficiently balancing air interface load and implementation costs can be achieved, to alleviate a conflict between learning precision and learning efficiency. The hierarchical network architecture (or may be referred to as an AI architecture with a hierarchical mechanism) provided in this application may be used as a general framework to support various system solutions that are related to a complex neural network and that are in a commercial communication system, so that there is more room for performance improvement and complexity reduction, and implementability of using an intelligent network in a communication network can be improved.

Based on the foregoing technical solutions, a first sub-network may be trained by using a few communication devices, and another communication device may share the first sub-network, so that training overheads can be minimized, and training efficiency can be improved. In addition, a training policy is flexibly adjusted for different problems. To be specific, targeted learning and update may be performed when an actual problem is faced. For example, each communication device may separately train a second sub-network, to improve a speed and training efficiency, so that network performance and a real-time requirement can be ensured as much as possible.

In addition, in some of the foregoing embodiments, a few terminal devices may train a first sub-network and a network device may indicate a group ID (such as an ID of a terminal device group), to assist in designing the target intelligent network with the hierarchical mechanism. Alternatively, a few terminal devices may train a first sub-network and a terminal device may feed back a group ID, to assist in designing the target intelligent network with the hierarchical mechanism.

The embodiments described in FIG. 9 to FIG. 18 may be independent solutions, or may be combined based on internal logic. All these solutions fall within the protection scope of this application.

It may be understood that in the foregoing method embodiments, an operation implemented by a terminal device may alternatively be implemented by a component (such as a chip or a circuit) that may be used in the terminal device, and an operation implemented by a network device may alternatively be implemented by a component (such as a chip or a circuit) that may be used in the network device.

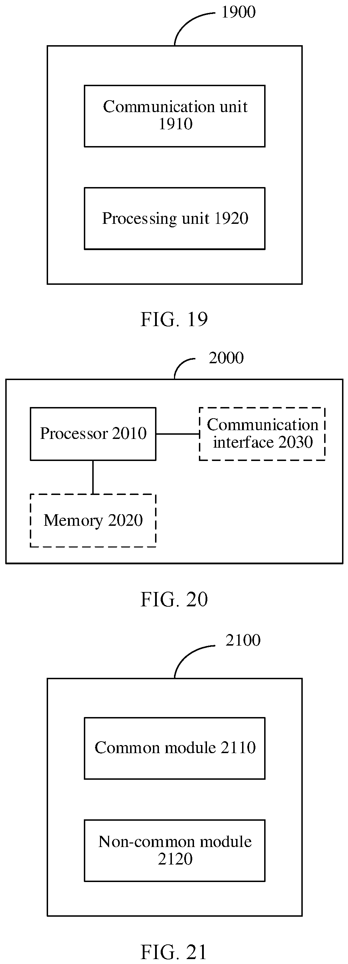

Apparatuses provided in embodiments of this application are described below in detail with reference to FIG. 19 to FIG. 22. It should be understood that descriptions of apparatus embodiments correspond to the descriptions of the method embodiments. Therefore, for content that is not described in detail, refer to the foregoing method embodiments. For brevity, details are not described herein again.

As shown in FIG. 19, an embodiment of this application provides an information processing apparatus 1900. The apparatus 1900 may be configured to perform the method 900, the method 1100, and the method 1200 in the foregoing embodiments. The apparatus 1900 includes a communication unit 1910 and a processing unit 1920.

In a possible implementation, the communication unit 1910 is configured to obtain information in a communication network; and the processing unit 1920 is configured to process the information by using a target intelligent network, where the target intelligent network includes a first sub-network and a second sub-network, the first sub-network is configured to process a common feature in the information, and the second sub-network is configured to process a non-common feature in the information.

In an example, the first sub-network is configured to process a common feature of one or more communication devices; or the first sub-network is configured to process a common feature in one or more communication scenarios.

In another example, the second sub-network is configured to process a non-common feature of one communication device; or the second sub-network is configured to process a non-common feature in one communication scenario.

In another possible implementation, the communication unit 1910 is configured to obtain information in a communication network; and the processing unit 1920 is configured to process the information by using a target intelligent network, where the target intelligent network includes a first sub-network and a second sub-network, where the first sub-network corresponds to a plurality of communication devices, and the second sub-network corresponds to one communication device; or the first sub-network corresponds to a plurality of communication scenarios, and the second sub-network corresponds to one communication scenario.

In an example, classification of the first sub-network and the second sub-network is performed based on one or more of the following: environment data information, sensing signal information, communication device identification information, service type information, or terminal device feedback suggestion information.

In another example, information related to the first sub-network and/or the second sub-network is carried in one or more of the following signaling: radio resource control, a media access control-control element, downlink control information, or uplink control information.

In another example, the first sub-network corresponds to one or more indexes.

In another example, an update periodicity of the first sub-network is different from an update periodicity of the second sub-network.

In another example, the first sub-network corresponds to a plurality of terminal devices; and the first sub-network is obtained by training a part or all of the plurality of terminal devices.

In another example, a part or all of terminal devices are terminal devices indicated by the network device, or a part or all of terminal devices are terminal devices determined based on preset information.

In another example, the first sub-network is obtained by training a part of a plurality of terminal devices, and the part of terminal devices share the first sub-network with a remaining terminal device in the plurality of terminal devices.

In another example, the communication unit 1910 is further configured to: obtain information about the first sub-network based on the index corresponding to the first sub-network; or receive indication information, and obtain information about the first sub-network based on the indication information, where the indication information indicates the information about the first sub-network.

In another example, the common feature includes one or more of the following: geographical location information, delay spread information, Doppler distribution information, or angle distribution information.

For example, a product implementation form of the information processing apparatus 1900 provided in this embodiment of this application is program code that may be run on a computer.

For example, the information processing apparatus 1900 provided in this embodiment of this application may be a communication device, or may be a chip, a chip system, or a circuit used in the communication device. When the apparatus 1900 is the communication device, the communication unit 1910 may be a transceiver or an input/output interface; and the processing unit 1920 may be a processor. When the apparatus 1900 is the chip, the chip system, or the circuit used in the communication device, the communication unit 1910 may be an input/output interface, an interface circuit, an output circuit, an input circuit, a pin, a related circuit, or the like on the chip, the chip system, or the circuit; and the processing unit 1920 may be a processor, a processing circuit, a logic circuit, or the like.

As shown in FIG. 20, an embodiment of this application further provides an information processing apparatus 2000. The apparatus 2000 includes a processor 2010. The processor 2010 is coupled to a memory 2020. The memory 2020 is configured to store a computer program or instructions. The processor 2010 is configured to execute the computer program or the instructions stored in the memory 2020, so that a method in the foregoing method embodiments is performed.

Optionally, as shown in FIG. 20, the apparatus 2000 may further include the memory 2020.

Optionally, as shown in FIG. 20, the apparatus 2000 may further include a communication interface 2030. The communication interface 2030 is configured to perform data transmission with the outside.

For example, the apparatus 2000 is configured to implement the method 900 in the embodiment shown in FIG. 9.

For another example, the apparatus 2000 is configured to implement the method 1100 in the embodiment shown in FIG. 11.

For still another example, the apparatus 2000 is configured to implement the method 1200 in the embodiment shown in FIG. 12.

In an implementation process, steps of the method may be completed by using an integrated logic circuit of hardware in the processor 2010 or instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 2020. The processor 2010 reads information in the memory 2020, and completes the steps of the method in combination with hardware of the processor 2010. To avoid repetition, details are not described herein.

It should be understood that, in this embodiment of this application, the processor may be one or more integrated circuits, and is configured to execute a related program, to perform a method embodiment of this application.

For descriptions of the memory and the processor, refer to the foregoing descriptions. Details are not described herein again.

As shown in FIG. 21, an embodiment of this application further provides an information processing apparatus 2100. The apparatus 2100 may be configured to implement the methods in the embodiments shown in FIG. 9 to FIG. 18. The apparatus 2100 includes a common module 2110 and a non-common module 2120.

For example, the common module 2110 may be configured to perform a related step of a first sub-network in the foregoing method embodiments. For example, the common module 2110 may be configured to process a common feature of each communication device in the communication device group 1 shown in FIG. 18.

For another example, the non-common module 2120 may be configured to perform a related step of a second sub-network in the foregoing method embodiments. For example, the common module 2110 may be configured to process a non-common feature in the information about the communication device 1 shown in FIG. 18.

For example, product implementation forms of the common module 2110 and the non-common module 2120 are program code that may be run on a computer.

For example, the common module 2110 and the non-common module 2120 may be integrated on a same chip, or may be respectively disposed on different chips.

An embodiment of this application further provides a computer-readable storage medium. The computer-readable storage medium stores program code to be executed by a device, and the program code is used to perform a method in the foregoing embodiments.

An embodiment of this application further provides a computer program product including instructions. When the computer program product runs on a computer, the computer is enabled to perform a method in the foregoing embodiments.

An embodiment of this application further provides a chip, and the chip includes a processor and a communication interface. The processor reads, through the communication interface, instructions stored in a memory, to perform a method in the foregoing embodiments.

Optionally, in an implementation, the chip may further include the memory, the memory stores instructions, the processor is configured to execute the instructions stored in the memory, and when the instructions are executed, the processor is configured to perform the method in the foregoing embodiments.

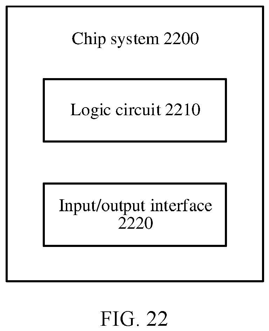

FIG. 22 is a schematic diagram of a chip system according to an embodiment of this application. The method 900 in the foregoing method embodiments, the method 1100 in the embodiment shown in FIG. 11 and the method 1200 in the embodiment shown in FIG. 12 may both be implemented in the chip shown in FIG. 22.

The chip system 2200 shown in FIG. 22 includes a logic circuit 2210 and an input/output interface (input/output interface) 2220. The logic circuit is configured to: be coupled to an input interface, and transmit data (such as at least a part of a second channel model) and a parameter through the input/output interface, to perform a method described in FIG. 9 to FIG. 18.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually represents an "or" relationship between the associated objects.

In the several embodiments provided in this application, it should be understood that the disclosed apparatuses and methods may be implemented in another manner. For example, the foregoing apparatus embodiments are only examples. For example, division into the foregoing units is only logical function division, and may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The foregoing units described as separate parts may or may not be physically separate, and parts displayed as units may or may not be physical units, in other words, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, units and algorithm steps in examples described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used for implementation, the implementation may be performed all or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. An information processing method, comprising:
obtaining information in a communication network; and
processing the information by using a target intelligent network, wherein the target intelligent network comprises a first sub-network and a second sub-network, the first sub-network is configured to process a common feature in the information, and the second sub-network is configured to process a non-common feature in the information.

2. The method according to claim 1, wherein
the first sub-network is configured to process a common feature of one or more communication devices; or
the first sub-network is configured to process a common feature in one or more communication scenarios.

3. The method according to claim 1 or 2, wherein
the second sub-network is configured to process a non-common feature of one communication device; or
the second sub-network is configured to process a non-common feature in one communication scenario.

4. The method according to any one of claims 1 to 3, wherein the common feature comprises one or more of the following: geographical location information, delay spread information, Doppler distribution information, or angle distribution information.

5. The method according to any one of claims 1 to 4, wherein classification of the first sub-network and the second sub-network is performed based on one or more of the following:
environment data information, sensing signal information, communication device identification information, service type information, or terminal device feedback suggestion information.

6. The method according to any one of claims 1 to 5, wherein information related to the first sub-network and/or the second sub-network is carried in one or more of the following signaling:
radio resource control, a media access control-control element, downlink control information, or uplink control information.

7. The method according to any one of claims 1 to 6, wherein the first sub-network corresponds to one or more indexes.

8. The method according to claim 7, wherein the first sub-network corresponds to a plurality of communication devices, and the index is a group identifier of the plurality of communication devices.

9. The method according to any one of claims 1 to 8, wherein an update periodicity of the first sub-network is different from an update periodicity of the second sub-network.

10. The method according to any one of claims 1 to 9, wherein the first sub-network corresponds to a plurality of communication devices; and
the first sub-network is obtained by training a part or all of the plurality of communication devices.

11. The method according to claim 10, wherein
the part or all of the communication devices are communication devices indicated by a network device; or
the part or all of the communication devices are communication devices determined based on preset information.

12. The method according to claim 10 or 11, wherein the first sub-network is obtained by training a part of the plurality of communication devices, and the part of the communication devices share the first sub-network with a remaining communication device in the plurality of communication devices.

13. The method according to any one of claims 1 to 12, wherein the method further comprises:
obtaining information about the first sub-network based on the index corresponding to the first sub-network; or
receiving indication information, and obtaining information about the first sub-network based on the indication information, wherein the indication information indicates the information about the first sub-network.

14. An information processing method, comprising:
obtaining information in a communication network; and
processing the information by using a target intelligent network, wherein
the target intelligent network comprises a first sub-network and a second sub-network; and
the first sub-network corresponds to a plurality of communication devices, and the second sub-network corresponds to one communication device; or
the first sub-network corresponds to a plurality of communication scenarios, and the second sub-network corresponds to one communication scenario.

15. The method according to claim 14, wherein classification of the first sub-network and the second sub-network is performed based on one or more of the following:
environment data information, sensing signal information, communication device identification information, service type information, or terminal device feedback suggestion information.

16. The method according to claim 14 or 15, wherein information related to the first sub-network and/or the second sub-network is carried in one or more of the following signaling:
radio resource control, a media access control-control element, downlink control information, or uplink control information.

17. The method according to any one of claims 14 to 16, wherein the first sub-network corresponds to one or more indexes.

18. The method according to claim 17, wherein the first sub-network corresponds to a plurality of communication devices, and the index is a group identifier of the plurality of communication devices.

19. The method according to any one of claims 14 to 18, wherein an update periodicity of the first sub-network is different from an update periodicity of the second sub-network.

20. The method according to any one of claims 14 to 19, wherein the first sub-network corresponds to a plurality of communication devices; and
the first sub-network is obtained by training a part or all of the plurality of communication devices.

21. The method according to claim 20, wherein
the part or all of the communication devices are communication devices indicated by a network device; or
the part or all of the communication devices are communication devices determined based on preset information.

22. The method according to claim 20 or 21, wherein the first sub-network is obtained by training a part of the plurality of communication devices, and the part of the communication devices share the first sub-network with a remaining communication device in the plurality of communication devices.

23. The method according to any one of claims 14 to 22, wherein the method further comprises:
obtaining information about the first sub-network based on the index corresponding to the first sub-network; or
receiving indication information, and obtaining information about the first sub-network based on the indication information, wherein the indication information indicates the information about the first sub-network.

24. An information processing apparatus, comprising a communication unit and a processing unit, wherein
the communication unit is configured to obtain information in a communication network; and
the processing unit is configured to process the information by using a target intelligent network, wherein the target intelligent network comprises a first sub-network and a second sub-network, the first sub-network is configured to process a common feature in the information, and the second sub-network is configured to process a non-common feature in the information.

25. The apparatus according to claim 24, wherein
the first sub-network is configured to process a common feature of one or more communication devices; or
the first sub-network is configured to process a common feature in one or more communication scenarios.

26. The apparatus according to claim 24 or 25, wherein
the second sub-network is configured to process a non-common feature of one communication device; or
the second sub-network is configured to process a non-common feature in one communication scenario.

27. The apparatus according to any one of claims 24 to 26, wherein the common feature comprises one or more of the following: geographical location information, delay spread information, Doppler distribution information, or angle distribution information.

28. The apparatus according to any one of claims 24 to 27, wherein classification of the first sub-network and the second sub-network is performed based on one or more of the following:
environment data information, sensing signal information, communication device identification information, service type information, or terminal device feedback suggestion information.

29. The apparatus according to any one of claims 24 to 28, wherein information related to the first sub-network and/or the second sub-network is carried in one or more of the following signaling:
radio resource control, a media access control-control element, downlink control information, or uplink control information.

30. The apparatus according to any one of claims 24 to 29, wherein the first sub-network corresponds to one or more indexes.

31. The apparatus according to claim 30, wherein the first sub-network corresponds to a plurality of communication devices, and the index is a group identifier of the plurality of communication devices.

32. The apparatus according to any one of claims 24 to 31, wherein an update periodicity of the first sub-network is different from an update periodicity of the second sub-network.

33. The apparatus according to any one of claims 24 to 32, wherein the first sub-network corresponds to a plurality of communication devices; and
the first sub-network is obtained by training a part or all of the plurality of communication devices.

34. The apparatus according to claim 33, wherein
the part or all of the communication devices are communication devices indicated by a network device; or
the part or all of the communication devices are communication devices determined based on preset information.

35. The apparatus according to claim 33 or 34, wherein the first sub-network is obtained by training a part of the plurality of communication devices, and the part of the communication devices share the first sub-network with a remaining communication device in the plurality of communication devices.

36. The apparatus according to any one of claims 24 to 35, wherein the communication unit is specifically configured to:
obtain information about the first sub-network based on the index corresponding to the first sub-network; or
receive indication information, and obtain information about the first sub-network based on the indication information, wherein the indication information indicates the information about the first sub-network.

37. The apparatus according to any one of claims 24 to 36, wherein the processing unit is a processor.

38. The apparatus according to any one of claims 24 to 37, wherein the apparatus is any one of the following: a communication device, a chip, or a chip system.

39. An information processing apparatus, comprising a communication unit and a processing unit, wherein
the communication unit is configured to obtain information in a communication network; and
the processing unit is configured to process the information by using a target intelligent network, wherein
the target intelligent network comprises a first sub-network and a second sub-network; and
the first sub-network corresponds to a plurality of communication devices, and the second sub-network corresponds to one communication device; or
the first sub-network corresponds to a plurality of communication scenarios, and the second sub-network corresponds to one communication scenario.

40. The apparatus according to claim 39, wherein classification of the first sub-network and the second sub-network is performed based on one or more of the following:
environment data information, sensing signal information, communication device identification information, service type information, or terminal device feedback suggestion information.

41. The apparatus according to claim 39 or 40, wherein information related to the first sub-network and/or the second sub-network is carried in one or more of the following signaling:
radio resource control, a media access control-control element, downlink control information, or uplink control information.

42. The apparatus according to any one of claims 39 to 41, wherein the first sub-network corresponds to one or more indexes.

43. The apparatus according to claim 42, wherein the first sub-network corresponds to a plurality of communication devices, and the index is a group identifier of the plurality of communication devices.

44. The apparatus according to any one of claims 39 to 43, wherein an update periodicity of the first sub-network is different from an update periodicity of the second sub-network.

45. The apparatus according to any one of claims 39 to 44, wherein the first sub-network corresponds to a plurality of communication devices; and
the first sub-network is obtained by training a part or all of the plurality of communication devices.

46. The apparatus according to claim 45, wherein
the part or all of the communication devices are communication devices indicated by a network device; or
the part or all of the communication devices are communication devices determined based on preset information.

47. The apparatus according to claim 45 or 46, wherein the first sub-network is obtained by training a part of the plurality of communication devices, and the part of the communication devices share the first sub-network with a remaining communication device in the plurality of communication devices.

48. The apparatus according to any one of claims 39 to 47, wherein the communication unit is specifically configured to:
obtain information about the first sub-network based on the index corresponding to the first sub-network; or
receive indication information, and obtain information about the first sub-network based on the indication information, wherein the indication information indicates the information about the first sub-network.

49. The apparatus according to any one of claims 39 to 48, wherein the processing unit is a processor.

50. The apparatus according to any one of claims 39 to 49, wherein the apparatus is any one of the following: a terminal device, a chip, or a chip system.

51. An information processing apparatus, comprising:
a communication interface, configured to input and/or output information; and
a processor, configured to execute a computer program, to enable the apparatus to implement the method according to any one of claims 1 to 13.

52. The apparatus according to claim 51, wherein the apparatus is any one of the following:
a communication device, a chip, or a chip system.

53. An information processing apparatus, comprising:
a communication interface, configured to input and/or output information; and
a processor, configured to execute a computer program, to enable the apparatus to implement the method according to any one of claims 14 to 23.

54. The apparatus according to claim 53, wherein the apparatus is any one of the following: a communication device, a chip, or a chip system.

55. An information processing apparatus, comprising:
a memory, configured to store executable instructions; and
a processor, configured to invoke and run the executable instructions in the memory, to perform the method according to any one of claims 1 to 13.

56. The apparatus according to claim 55, wherein the apparatus is any one of the following: a communication device, a chip, or a chip system.

57. An information processing apparatus, comprising:
a memory, configured to store executable instructions; and
a processor, configured to invoke and run the executable instructions in the memory, to perform the method according to any one of claims 14 to 23.

58. The apparatus according to claim 57, wherein the apparatus is any one of the following: a communication device, a chip, or a chip system.

59. A computer-readable storage medium, wherein the computer-readable storage medium stores program instructions, and when the program instructions are run by a processor, the method according to any one of claims 1 to 13 is implemented.

60. A computer-readable storage medium, wherein the computer-readable storage medium stores program instructions, and when the program instructions are run by a processor, the method according to any one of claims 14 to 23 is implemented.

61. A computer program product, wherein the computer program product comprises computer program code, and when the computer program code is run on a computer, the method according to any one of claims 1 to 13 is implemented.

62. A computer program product, wherein the computer program product comprises computer program code, and when the computer program code is run on a computer, the method according to any one of claims 14 to 23 is implemented.
